(19) Europäisches Patentamt
European Patent Office
Office européen des brevets

(11) EP 4 209 330 B1

(12) **EUROPEAN PATENT SPECIFICATION**

(45) Date of publication and mention of the grant of the patent:
**08.10.2025 Bulletin 2025/41**

(21) Application number: **21864056.3**

(22) Date of filing: **06.08.2021**

(51) International Patent Classification (IPC):
***B29C 55/12*** (2006.01) ***B29C 48/08*** (2019.01) ***B29C 48/285*** (2019.01) ***B29C 48/395*** (2019.01) ***B29D 7/01*** (2006.01) ***B32B 3/30*** (2006.01) ***B65H 75/02*** (2006.01) ***C08J 5/18*** (2006.01) ***B32B 27/08*** (2006.01) ***B32B 27/16*** (2006.01) ***B32B 27/18*** (2006.01) ***B32B 27/36*** (2006.01) ***B29B 17/00*** (2006.01) ***B29B 17/02*** (2006.01) ***B29B 17/04*** (2006.01) *B29K 67/00* (2006.01) *B29K 105/26* (2006.01)

(52) Cooperative Patent Classification (CPC):
**C08J 5/18; B29B 17/0042; B29C 48/08; B29C 48/285; B29C 48/395; B29C 55/12; B32B 3/30; B32B 27/08; B32B 27/16; B32B 27/18; B32B 27/36;** B29B 17/02; B29B 17/0412; B29B 2017/0296; B29K 2067/00; (Cont.)

(86) International application number:
**PCT/JP2021/029335**

(87) International publication number:
**WO 2022/049998 (10.03.2022 Gazette 2022/10)**

(54) **BIAXIALLY-ORIENTED POLYESTER FILM ROLL**

ROLLE AUS BIAXIAL AUSGERICHTETER POLYESTERFOLIE

ROULEAU DE FILM POLYESTER À ORIENTATION BIAXIALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2020 JP 2020148502**

(43) Date of publication of application:
**12.07.2023 Bulletin 2023/28**

(73) Proprietor: **TOYOBO CO., LTD.**
**Osaka-shi, Osaka 530-0001 (JP)**

(72) Inventors:
- **MANABE, Nobuyuki**
  **Inuyama-shi, Aichi 484-8508 (JP)**
- **GOTO, Takamichi**
  **Inuyama-shi, Aichi 484-8508 (JP)**
- **HARUTA, Masayuki**
  **Inuyama-shi, Aichi 484-8508 (JP)**

(74) Representative: **Vossius & Partner Patentanwälte Rechtsanwälte mbB**
**Siebertstraße 3**
**81675 München (DE)**

(56) References cited:
**WO-A1-2019/187694**
**WO-A1-2019/187694**
**WO-A1-2020/090673**
**WO-A1-2020/095725**
**WO-A1-2020/095725**
**JP-A- 2011 256 328**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 209 330 B1

(52) Cooperative Patent Classification (CPC): (Cont.)
B29K 2105/26; B32B 2250/244; B32B 2264/1021; B32B 2264/303; B32B 2272/00; B32B 2307/414; B32B 2307/518; B32B 2307/746; C08J 2367/02; Y02W 30/62

## Description

### TECHNICAL FIELD

The present invention relates to a biaxially oriented polyester film roll, and more particularly it relates to a biaxially oriented polyester film roll which has excellent transparency and mechanical characteristics, which also has excellent ability to be wound up into a roll and/or lubricity during film manufacturing operations, which is a polyester film roll that is environmentally friendly due to its use of polyester resin(s) recycled by the market and/or society and including PET bottles (hereinafter sometimes referred to as "polyester resin employing recycled PET bottles"), and which exhibits little variation in physical properties in the machine direction thereof even when in the form of a long film roll, i.e., a roll of long wound length.

### BACKGROUND ART

Polyethylene terephthalate (PET), polybutylene terephthalate (PBT), and other such polyester resins that are thermoplastic resins which excel in heat-resistance and mechanical properties are employed in extremely diverse fields which include plastic films, electronics, energy, packaging materials, automotive, and so forth. Among plastic films, because biaxially oriented polyester films provide an excellent balance with respect to cost and mechanical characteristics and strength, heat resistance, dimensional stability, chemical resistance, optical characteristics, and so forth, they are widely employed in industrial and packaging fields.

In the field of industrial films, because they have excellent transparency, they are capable of being employed as functional films for liquid crystal displays, plasma displays, and other such flat panel displays (FPD). Furthermore, PET films that have been imparted with hydrolytic resistance are also employed as film for use in solar cell backsheets, as these are employed for a wide variety of purposes in the form of functional films and base films.

In the field of packaging films, these are used in food packaging and in gas barrier film applications. In particular, films that excel in gas barrier properties are used as packaging material for foods, pharmaceutical agents, electronic components, and elsewhere where airtightness is required, and are used as gas-blocking materials, the demand for which has increased in recent years.

For example, Patent Reference No. 1 discloses a biaxially oriented polyester film that is a biaxially oriented polyethylene terephthalate film employing PET bottle reconstituted raw material and that is characterized in that molten resistivity at a temperature of 285° C is within $1.0 \times 10^8\ \Omega\cdot$cm, and that sodium and potassium are present within the film in amounts that are greater than 0 ppm but not greater than 150 ppm.

Such art makes it possible to obtain a biaxially oriented polyester film in which there is little residue from liquid detergent components employed during manufacture of the PET bottle reconstituted raw material, thermal stability is excellent, there is little foreign matter, resistivity when molten is also stable, and there is no impairment of film productivity or grade.

However, while there is mention of a method for manufacture of a polyester-type resin sheet of good quality without pinner bubbles or other such surface defects as a result of adjustment of wire-like electric location, electric current, and/or voltage and increasing the rotational velocity of the cooling drum for the purpose of improving productivity, there is no mention of grade such as ability of the film to be wound up into a roll and/or lubricity during film manufacturing operations. Whereas silica particles of average particle diameter 2.5 μm are used for the purpose of improving lubricity, these being added to cause silica to be present within the film in an amount that is 150 ppm to 640 ppm, as there is a tendency for arithmetic mean height Sa and maximum projecting height Sp to be low, purging of air entrained therebetween when the biaxially oriented polyester film is being wound up into a roll is nonuniform, and there has been a problem in that this has caused poor external appearance, i.e., wrinkling and bubble-like pock marks, and adequate consideration has not been given to film productivity and grade.

As a means to obtain a polyester film such as would, as described above, have excellent transparency and mechanical characteristics, which would also have excellent ability to be wound up into a roll and/or lubricity during film manufacturing operations, and which would be environmentally friendly due to its use of polyester resin(s) recycled by the market and/or society and including PET bottles, it might be expected that this could be obtained by carrying out biaxial stretching of a polyester resin composition in which polyester resin that contains particles has been blended with polyester resin(s) recycled by the market and/or society and including PET bottles, it being commonplace to carry out film formation with mixture of resin chips of ordinary specific gravity and resin chips that are of high specific gravity and that contain particles. However, because there is a large difference in the specific gravities of resin chips that contain particles and ordinary resin chips, segregation between these raw material resin chips tends to cause occurrence of variation in ratios between raw materials during the mixture and extrusion operations, causing occurrence of differences in physical properties in the machine direction of the film. As a result, there are situations in which it becomes impossible to obtain product having uniform physical properties in the machine direction thereof where the product is a roll of long wound length.

Inasmuch as there are polyester resins employing recycled PET bottles that contain an isophthalic acid component and that contain a large amorphous component, because with these the stretching stress during stretching tends to be lower than is the case with conventional polyester resins derived from fossil fuels, inorganic particles and other such lubricants tend to remain undispersed. As a result, there is a tendency for the surface roughness of the biaxially oriented polyester film to be low, and there are situations in which it becomes impossible to obtain adequate ability for the film to be wound up into a roll and/or lubricity. Patent Reference 2 relates to a biaxially oriented polyester film with a defined maximum profile peak height and arithmetic mean roughness at at least one film surface. Patent Reference 3 discloses a polyester film roll.

PRIOR ART REFERENCES

PATENT REFERENCES

Patent Reference No. 1: Japanese Patent No. 6036099
Patent Reference No. 2: WO 2020095725 A1
Patent Reference No. 3: WO 2019187694 A1

SUMMARY OF THE INVENTION

PROBLEM TO BE SOLVED BY INVENTION

It is an object of the present invention to make improvements with respect to such problems of the conventional art, and to provide a biaxially oriented polyester film roll which has excellent transparency and mechanical characteristics, which also has excellent ability to be wound up into a roll and/or lubricity during film manufacturing operations, and which is environmentally friendly due to its use of polyester resin(s) recycled by the market and/or society and including PET bottles, and to more preferably provide a biaxially oriented polyester film roll which has little foreign matter, and which exhibits little variation in physical properties in the machine direction thereof even when in the form of a long film roll, i.e., a roll of long wound length.

MEANS FOR SOLVING PROBLEM

As a result of intensive research, the present inventor(s) discovered that, in the context of a biaxially oriented polyester film obtained by biaxially stretching a polyester resin composition in which polyester resin that contains particles has been blended with polyester resin(s) recycled by the market and/or society and including PET bottles, when mixing resin chips serving as raw material, by causing chips of the polyester resin recycled by the market and/or society and including PET bottles to be supplied to a hopper from above, by causing chips of the polyester resin that contains particles to be supplied thereto by way of plumbing disposed within the hopper and having an outlet immediately above the extruder (hereinafter sometimes referred to as "inner piping"), and by causing the two types of chips to be mixed and melt extruded therefrom, it is possible to obtain a uniform film that exhibits little variation in physical properties in the machine direction of the film. The present inventor(s) moreover discovered in particular that even where during manufacture of reconstituted raw material from the market and/or society and including PET bottles employed in accordance with the present invention this is such that alkali cleaning is carried out for the purpose of removing foreign matter, there being little residue from the liquid detergent components that are used, not only is there little in the way of foreign matter but it is also possible, by causing the maximum projecting height at the film surface to be not greater than a particular height, to cause improvement in ability to be wound up into a roll and/or lubricity during film manufacturing operations, culminating in the present invention.

That is, the present invention provides:

A biaxially oriented polyester film roll, wound up at which there is a biaxially oriented polyester film comprising a polyester resin composition comprising particles and polyester resin employing recycled PET bottles, wherein arithmetic mean height Sa at at least one face of the biaxially oriented polyester film is not greater than 0.10 μm, and the biaxially oriented polyester film roll satisfies all of conditions (1) through (4), below;

(1) maximum projecting height Sp at at least one film surface is not greater than 3.0 μm;
(2) haze is not greater than 10% for a film thickness of 12 μm;
(3) purge time for air between front and back surfaces of the film, measured as defined later on in the description, is not greater than 14 seconds;

(4) variation in arithmetic mean height Sa and in maximum projecting height Sp when sampling is carried out at 1000 m intervals from a surface layer of the film roll to a roll core thereof in a machine direction of the film are each not greater than 40%;

where the variation is given by Formula [1], below, when maximum value is taken to be Xmax, minimum value is taken to be Xmin, and average value is taken to be Xave; and

$$\text{Variation (\%)} = 100 \times (\text{Xmax - Xmin})/\text{Xave} \qquad [1] .$$

EFFECT OF THE INVENTION

The present invention makes it possible to provide a biaxially oriented polyester film which has excellent transparency and mechanical characteristics, which also has excellent ability to be wound up into a roll and/or lubricity during film manufacturing operations, which is a polyester film roll that is environmentally friendly due to its use of polyester resin(s)) recycled by the market and/or society and including PET bottles, and which exhibits little variation in physical properties in the machine direction thereof even when in the form of a long film roll, i.e., a roll of long wound length.

In particular, whereas advances have been made in recent years in which the biaxially oriented polyester film roll that is first wound up (hereinafter "master roll") is made to undergo stretching operation(s) to increase length in the transverse direction and to increase length in the machine direction for the purpose of increasing the efficiency with which the biaxially oriented polyester film is produced, it makes it possible to obtain, even with film rolls of such large sizes, a biaxially oriented polyester film for which there is little occurrence of blocking and poor external appearance in the form of wrinkling and bubble-like pock marks such as might otherwise occur if purging of air entrained therebetween when the biaxially oriented polyester film is being wound up into a roll were to be nonuniform, and which facilitates carrying out secondary processing with respect thereto.

And the same is true with respect to smaller film rolls such as may be produced by slitting and subdividing the master roll.

BRIEF DESCRIPTION OF DRAWINGS

[FIG. 1] Schematic diagram for explaining an example of a method for mixing resin chips for the purpose of manufacturing a biaxially oriented polyester film in accordance with the present invention.
[FIG. 2] FIG. 2 is an enlarged view of a portion of what is shown in FIG. 1.

EMBODIMENTS FOR CARRYING OUT THE INVENTION

The present invention is described in detail below.

Polyester Resin Employing Recycled PET Bottles

As polyester resin employing recycled PET bottles in accordance with the present invention, polyester resins (hereinafter sometimes referred to as "mechanically recycled polyester resins") obtained by physical reconstitution methods in which used PET bottles recovered by the market and/or society are separated, pulverized, and cleaned, and, following adequate removal of surface grime and foreign matter, are exposed to high temperature, and following intensive cleaning carried out with respect to contaminants and the like which remain at the interior of the resin, are repelletized, and/or polyester resins (hereinafter sometimes referred to as "chemically recycled polyester resins") obtained by causing polyester resin contained within used container packaging to be made to decompose to the monomer level, thereafter removing contaminants and the like therefrom, and carrying out repolymerization thereof, may be favorably employed.

The polyester resin recycled by the market and/or society and including PET bottles which may be employed in biaxially oriented polyester film in accordance with the present invention is made up primarily of recycled containers that are made up primarily of polyethylene terephthalate; for example, recycled containers for tea drinks, soft drinks, and other such beverages may be favorably employed, it being possible for these to be oriented as appropriate, and while it is preferred that these be colorless, presence of some colorant component is possible.

Reconstituted raw material recycled from the market and/or society and including PET bottles that may be favorably employed is polyester formed as a result of manufacture by means of ordinary polymerization or solid-state polymerization, it being preferred that this be made up primarily of polyethylene terephthalate, there being no objection where this is made to also contain other polyester component(s) and/or copolymerized component(s). This may also be made to contain catalyst(s) in the form of antimony, germanium, titanium, and/or other such metal compounds, and/or stabilizer(s) in the form of phosphorous compound(s) and/or the like. It is often the case that polyester for PET bottles will ordinarily employ catalyst in the form of germanium, and where PET bottle reconstituted raw material is employed and this is made into a film, it will be the case that germanium will be present within the film in an amount that is 1 ppm or higher. However, it must be remembered that because this is the catalyst content thereof, it is ordinarily the case that this is not greater than 100 ppm at most, and is usually not greater than 50 ppm.

Below, description is given with respect to mechanically recycled polyester resins and chemically recycled polyester resins.

Mechanically Recycled Polyester Resins

After used recycled PET bottles that have been gathered together are separated so as to prevent admixture by trash and other materials, and labels and the like have been removed therefrom, these are pulverized and made into flakes. It is often the case that foreign matter adheres to and is mixed within such flakes. Furthermore, one can also imagine situations in which PET bottles used by consumers were filled with reagents, solvents, and/or other such chemical substances and used. For example, one can imagine that there might be detergents for kitchen utensils or the like, pesticides, herbicides, or agricultural chemicals, or any of various types of oils or the like. Because chemical substances adhering to surfaces of PET bottles cannot be adequately removed by ordinary cleaning, it is preferred that alkali cleaning be carried out. As alkali metal hydroxide solution for use during such a cleaning operation, sodium hydroxide solution or potassium hydroxide solution is used. At such a cleaning operation, precleaning may be carried out before carrying out alkali cleaning.

If alkali cleaning is not carried out, because there will be foreign matter that remains within the resin raw material, not only will admixture thereof serve as cause for occurrence of breakage during film formation, lowering productivity, but it will also be the case that foreign matter will remain within the film, and may affect film external appearance or cause occurrence of printing voids during any printing operation that follows.

While concentration of an aqueous alkali metal hydroxide solution used at the foregoing cleaning operation will vary depending on temperature, time, and the situation with respect to agitation, this is ordinarily within the range 1 wt% to 10 wt%. Furthermore, the time required for cleaning is within the range 10 minutes to 100 minutes, it being preferred to increase effect that this be carried out while agitating.

Following alkali cleaning, it is preferred that rinsing/cleaning and drying be carried out. Alkali cleaning and/or rinsing/cleaning may be repeated multiple times. Where a component of the aqueous alkali metal hydroxide solution used for cleaning at the alkali cleaning operation remains in the flakes, there are cases in which, by way of melt extrusion operation(s) carried out at the pellet granulation operation thereafter and/or melt extrusion operation(s) carried out during film formation, this can have an effect on the physical properties of the film that is ultimately obtained.

It is preferred that the concentrations of sodium and potassium within the film that is ultimately obtained through use of such polyester resins recycled by the market and/or society and including PET bottles be greater than 0 ppm but not greater than 150 ppm, more preferred that this be 3 ppm to 120 ppm, and still more preferred that this be 5 ppm to 80 ppm. Because there may be lowering of heat resistance and/or thermal stability, and/or discoloration, when concentration(s) of sodium and/or potassium present within the film are greater than 150 ppm, this is not preferred. Furthermore, were there to be absolutely none whatsoever thereof, because there would be diminution of the effect whereby generation of diethylene glycol is suppressed and so forth, this is not preferred. Furthermore, as there are situations in which polyester resins recycled by the market and/or society and including PET bottles contain small amounts of such components, complete elimination thereof would be difficult.

At such a cleaning operation, the aqueous alkali metal hydroxide solution causes a portion of the PET bottle flakes to undergo hydrolysis. Furthermore, heating during forming of PET bottles causes reduction in the degree of polymerization of the resin. Moreover, application of heat and moisture during remelting and pelletization following pulverization so as to permit reuse of recovered PET bottles can have the effect of lowering the degree of polymerization. Although it is possible to reuse these as is, depending on the use to which they will be put, inasmuch as reduction in the degree of polymerization may cause formability, strength, transparency, heat resistance, and/or the like to become inferior, there are cases in which these cannot be reused as is.

In such situations, to cause recuperation of the degree of polymerization where this has been lowered, it is preferred that PET bottle flakes obtained as a result of pulverization and cleaning, or that which results when flakes have been melted and pelletized, be made to undergo solid-state polymerization.

At the solid-state polymerization operation, this may be carried out by causing flakes obtained as a result of cleaning, or that which results when flakes have been melt extruded and pelletized, to undergo continuous solid-state polymerization in nitrogen gas, rare gas(es), or other such inert gas(es) at 180° to 245° C, or more preferably 200° to 240° C.

It is desirable that this be carried out such that flake or pellet conditions are adjusted so that conditions at the polyester resin recycled by the market and/or society and including PET bottles ultimately are such that intrinsic viscosity is 0.55 dl/g to 0.90 dl/g, or more preferably 0.60 dl/g to 0.85 dl/g.

Description will be given with respect to the operation in which flakes are pelletized. An extruder having degassing means and filtration means is used to melt, extrude, cool, and granulate flakes.

During the melt operation at the extruder, this may be carried out by performing melt kneading at ordinarily 260° to 300° C, or more preferably 265° to 295° C. It is necessary that the flakes obtained as a result of pulverization of PET bottles which are fed thereinto be adequately dried, drying being carried out at conditions such that this is 5 to 200, or preferably 10 ppm to 100 ppm, or more preferably 15 ppm to 50 ppm. Where flake moisture content is high, this will cause the hydrolysis reaction to proceed at the melt operation, lowering the intrinsic viscosity of the polyester resin that is obtained. As degassing means, it is preferred that a vacuum vent be present at at least one location within the resin melt zone.

Furthermore, it is preferred that said extruder be such that filtration means thereat have a filter capable of filtering and removing solid foreign matter from the molten resin for which particle diameter is 25 μm or greater, preferably 15 μm or greater, and more preferably 10 μm or greater.

Molten resin that has passed through the filter travels by way of dice and is cooled in water, following which it is granulated as a result of being cut into pellets of desired shape.

Polyester Resin Composition

A biaxially oriented polyester film in accordance with the present invention comprises a polyester resin composition that contains the following polyester resin(s) as primary constituent thereof.

The polyester resin that makes up a biaxially oriented polyester film in accordance with the present invention is a polymer that may be synthesized from dicarboxylic acid or an ester-forming derivative thereof, and a diol or an ester-forming derivative thereof. Polyethylene terephthalate, polybutylene terephthalate, polyethylene-2,6-naphthalate may be cited as examples, polyethylene terephthalate being preferred from the standpoints of mechanical properties, heat resistance, cost, and so forth.

Where "primary constituent" is said here, this means that fractional content within the polyester resin composition is not less than 80 wt%, preferably that this is not less than 90 wt%, more preferably that this is not less than 95 wt%, and most preferably that this is not less than 98 wt%.

Furthermore, so long as it does not impair the object of the present invention, other component(s) may be copolymerized within such polyester resin(s). More specifically, as copolymerized components, dicarboxylic acid components that may be cited as examples thereof include isophthalic acid, naphthalene dicarboxylic acid, 4,4-biphenyldicarboxylic acid, adipic acid, sebacic acid, ester-forming derivatives thereof, and so forth. Furthermore, diol components that may be cited as examples thereof include diethylene glycol, hexamethylene glycol, neopentyl glycol, and cyclohexanedimethanol. Furthermore, polyethylene glycol, polypropylene glycol, and other such polyoxyalkylene glycols may also be cited as examples. It is preferred that the copolymerized amount thereof be within 10 mol% of the repeating units of which this is made up, more preferred that this be within 5 mol%, and most preferred that this be not greater than 3 mol%.

Chemically Recycled Polyester Resins

While there is no particular limitation with respect to the method of manufacturing chemically recycled polyester resins that may be employed in accordance with the present invention, these include, e.g., to give a specific example as described at Japanese Patent Application Publication Kokai No. 2000-169623, those in which following separation, pulverization, and cleaning of recovered used PET bottles to remove foreign matter therefrom, that which is obtained by causing decomposition and purification to proceed as far as PET resin raw material or intermediate raw material as a result of causing depolymerization thereof is polymerized to cause this to become new PET resin. Methods in which depolymerization is such that ethylene glycol (EG) is added, and, in the presence of a catalyst, this is made to return to as far as bis-2-hydroxyethyl terephthalate (BHET) which is an intermediate raw material during resin manufacture, and following purification thereof this is repolymerized to PET, and methods in which, as described at Japanese Patent Application Publication Kokai No. 2000-302707, repolymerization is carried out following production of terephthalic acid and ethylene glycol as a result of heat treatment in a nonaqueous organic solvent in the presence of a catalyst in which iron is an essential component and polyethylene terephthalate is oxidized, may be cited as examples.

Because it is characteristic of chemically recycled polyester resins that whereas foreign matter and foreign substances are removed between depolymerization and repolymerization, and reconstitution thereof into a polyester resin that is of high quality equivalent in grade to that of virgin resin is permitted thereby, and because the hygienic properties thereof are superior to those of the aforementioned mechanically recycled polyester resins, these may in particular be favorably used in food packaging applications.

Bales of used PET bottles that have been compressed and reduced in volume serve as starting material for chemically recycled polyester resins used in accordance with the present invention. Such bales of PET bottles may be manufactured in accordance with known methods currently being utilized by municipalities. Other polyethylene terephthalate waste material or PET bottle flakes may serve instead of bales of PET bottles as starting material.

Bales of PET bottles obtained as a result of compression and reduction in volume of PET bottle waste material are fed into a grinder, warm water or water of normal temperature, or warm water or water of normal temperature which contains detergent, is injected thereinto, and pulverization is carried out in water.

Next, the mixture of liquid detergent and PET bottle flakes that is discharged from the grinder is immediately thereafter made to undergo processing for separation based on specific gravity, as a result of which metal, stone, glass, sand, and flakes are separated therefrom. Next, the flakes and liquid detergent are separated, and the flakes are washed with deionized water and made to undergo centrifugal dewatering.

The crude polyethylene terephthalate flakes obtained from the foregoing pretreatment operation are depolymerized and melted, and are simultaneously hydrolyzed and made into a polyethylene terephthalate melt having a low degree of polymerization, and an excess amount of ethylene glycol is used to carry out depolymerization to obtain a two-species solution containing a mixture of crude BHET and crude ethylene glycol.

Following completion of the depolymerization reaction, the temperature of the two-species solution containing the mixture of crude BHET and crude ethylene glycol is decreased, and this is filtered to remove high-melting-point sediment in the form of unreacted linear and cyclic oligomers, coagulated residue of foreign plastics other than polyethylene terephthalate, metal, and other such solid foreign matter, and this is then made to undergo adsorption/ion exchange treatment, removal of dissolved ions and colored substances being carried out to remove any foreign matter present within the crude BHET.

The two-species solution containing the mixture of crude BHET and crude ethylene glycol obtained by way of the foregoing prepurification operation is made to undergo a distillation/vaporization procedure, causing the ethylene glycol to be separated and distilled therefrom, to obtain concentrated BHET, or the two-species solution containing the mixture is cooled to 10° C or lower to cause crystallization of BHET, following which the ethylene glycol and BHET are subjected to solid-liquid separation to obtain concentrated BHET, this concentrated BHET being subjected to vacuum evaporation such that temperature is above 190° C but not greater than 250° C and such that residence time of the concentrated BHET within the evaporator is not greater than 10 minutes, to obtain purified bis-β-hydroxyethyl terephthalate.

After the foregoing has been carried out and purified BHET of high purity has been obtained, this purified BHET is loaded into a melt polycondensation reaction vessel to obtain polyethylene terephthalate polymer of high purity.

Among the polyester resins that may make up biaxially oriented polyester films in accordance with the present invention, besides mechanically recycled polyester resins and chemically recycled polyester resins, as methods for manufacturing polyester resins derived from fossil fuels, methods in which the aforementioned dicarboxylic acid or an ester-forming derivative thereof and a diol or an ester-forming derivative thereof serving as primary starting materials are first, in accordance with ordinary methods, made to undergo an esterification and/or transesterification reaction, following which this is further made to undergo a polycondensation reaction under high temperature/vacuum conditions to carry out manufacture thereof, and so forth may be cited as examples.

From the standpoints of film formability, recoverability, and so forth, it is preferred that intrinsic viscosity of polyester resin making up a biaxially oriented polyester film in accordance with the present invention be within the range 0.50 dl/g to 0.90 dl/g, and it is more preferred that this be within the range 0.55 dl/g to 0.80 dl/g.

So as to cause a film roll, wound up at which there is a biaxially oriented polyester film in accordance with the present invention, to satisfy all of conditions (1) through (4), below, it is preferred that a polyester resin composition in accordance with the present invention contain at least one species of particles selected from among the group consisting of inorganic particles, organic particles, and particles constituting a mixture of the foregoing.

(1) Maximum projecting height Sp at at least one film surface is not greater than 3.0 μm.
(2) Haze is not greater than 10% for a film thickness of 12 μm.
(3) Purge time for air between front and back surfaces of the film is not greater than 14 seconds.
(4) Variation in arithmetic mean height Sa and in maximum projecting height Sp when sampling is carried out at 1000 m intervals from a surface layer of the film roll to a roll core thereof in a machine direction of the film are each not greater than 40%. (Variation is given by Formula [1], below, when maximum value is taken to be Xmax, minimum value is taken to be Xmin, and average value is taken to be Xave.

$$\text{Variation (\%)} = 100 \times (\text{Xmax} - \text{Xmin})/\text{Xave} \qquad [1]\ )$$

As inorganic particles that may be used, particles consisting of silica (silicon oxide), alumina (aluminum oxide), titanium dioxide, calcium carbonate, kaolin, crystalline glass filler, kaolin, talc, alumina, silica-alumina composite oxide particles, and barium sulfate may be cited as examples. As organic particles, acrylic resin particles, melamine resin particles, silicone resin particles, particles consisting of crosslinked polystyrene may be cited as examples. Thereamong, particles consisting of silica (silicon oxide), calcium carbonate, and/or alumina (aluminum oxide), or particles consisting of polymethacrylate, polymethyl acrylate, and/or derivative(s) thereof, are preferred, and particles consisting of silica (silicon oxide) and/or calcium carbonate are more preferred, thereamong silica (silicon oxide) being particularly preferred due to the fact that it will cause haze to be reduced. These will make it possible for transparency and lubricity to be manifested.

Weight average particle diameter of particles in the context of the present invention is the value as measured using a Coul counter. It is preferred that average particle diameter of the particles be 0.5 μm to 4.0 μm, more preferred that this be 0.8 μm to 3.8 μm, and still more preferred that this be 1.5 μm to 3.0 μm.

When the weight average particle diameter of the particles is below 0.5 μm, formation of surface irregularities will be insufficient, there will be a tendency for lubricity of the film to be reduced and for purging of air entrained therebetween when this is being wound up into a roll to be nonuniform, causing occurrence of poor external appearance in the form of wrinkling and pock marks over bubbles, and there will be a tendency for ability to be wound up into a roll to deteriorate.

When the weight average particle diameter of the particles exceeds 4.0 μm, there will be a tendency for quality of the film to be impaired inasmuch as there will be occurrence of printing defects and so forth due to formation of coarse projections. Furthermore, there will also be a tendency for maximum projecting height Sp at the surface of the biaxially oriented polyester film to be greater than 3.0 μm.

It is preferred that the concentration of inorganic particles within a polyester resin composition (masterbatch) which contains particles in accordance with the present invention be 2000 ppm to 70000 ppm, more preferred that this be 5000 ppm to 50000 ppm, and particularly preferred that this be 7000 ppm to 30000 ppm.

When the concentration of inorganic particles within the masterbatch is less than 2000 ppm, the fractional amount of the masterbatch which contains inorganic particles that must be added increases, the fractional amount of polyester resin recycled by the market and/or society and including PET bottles which is the primary ingredient decreases, and it effectively becomes impossible to obtain resin properties conducive to an inexpensive resin, environmental friendliness, and so forth. When the concentration of inorganic particles within the masterbatch is greater than 70000 ppm, because segregation of raw materials causes there to be large fluctuations in the ratios in which raw materials are present in the machine direction, there is a tendency for the film which is obtained to exhibit large variation in the machine direction.

As method for blending particles within a polyester resin composition in accordance with the present invention, while these might for example be added at any step(s) among the esterification step(s) for manufacture of polyester-type resin(s), after completion of transesterification reaction(s), and/or at step(s) before initiation of polycondensation reaction(s), it is preferred that these be added in the form of a slurry in which they are dispersed in ethylene glycol or the like and that polycondensation reaction(s) be made to proceed.

Furthermore, causing this be carried out through use of a method in which a vented kneader extruder is used to cause polyester-type resin raw material and a slurry in which the particles are dispersed in ethylene glycol, water, and/or the like to be blended, a method in which a kneader extruder is used to cause the dried particles and polyester-type resin raw material to be blended, or the like is also preferred.

At the operation at which mixing of particles and polyester-type resin raw material is carried out, while it is preferred from the standpoint of ability to stably obtain the intended surface state that agglomerations of particles be made as few as possible, it is possible by adjusting conditions at the film forming operation for formation of the biaxially oriented polyester film which follows the mixing operation that the influence thereof can be reduced.

Furthermore, so long as it does not impair the object of the present invention, a polyester resin composition in accordance with the present invention may contain small amount(s) of other polymer(s), antioxidant(s), thermal stabilizer(s), antistatic agent(s), ultraviolet light absorber(s), plasticizer(s), pigment(s), other additive(s), and/or the like.

Where mechanically recycled polyester resin is used in the biaxially oriented polyester film obtained in accordance with the foregoing, it is preferred that fractional content of the isophthalic acid component be within a range that is not less than 0.01 mol% but not greater than 2.0 mol% per 100 mol% of the entire dicarboxylic acid component within the film. Among the polyesters generally employed in PET bottles are those in which control of crystallinity is carried out for the purpose of causing external appearance of the bottle to be satisfactory, one means for achieving this being the use of polyester containing not greater than 10 mol% of isophthalic acid component.

For this reason, where a mechanically recycled polyester resin that has been recycled from PET bottles is used in a biaxially oriented polyester film in accordance with the present invention, this means that there will be a certain amount of materials that contain an isophthalic acid component.

It is preferred that the lower limit of the range in values for the amount of isophthalic acid component as a fraction of the entire dicarboxylic acid component that makes up the polyester resin contained within the film be 0.01 mol%, it being more preferred that this be 0.05 mol%, still more preferred that this be 0.1 mol%, and particularly preferred that this be 0.15 mol%. Because, as has already been mentioned, there are cases in which polyester resin recycled by the market and/or society and including PET bottles will contain a large isophthalic acid component, requiring the isophthalic acid component that makes up the polyester resin within the film to be less than 0.01 mol% is not so preferred, because it would have the effect of making manufacture of polyester film, present within recycled resin in a large fractional amount, difficult. It is preferred that the upper limit of the range in values for the amount of isophthalic acid component as a fraction of the entire dicarboxylic acid component that makes up the polyester resin contained within the film be 2.0 mol%, it being more preferred that this be 1.5 mol%, and still more preferred that this be 1.0 mol%. Above 2.0 mol% is not so preferred, because there would be cases in which the reduction in crystallinity that would result would cause the mechanical strength of the film to be reduced. Furthermore, causing the fractional content of the isophthalic acid component to be within the foregoing ranges is preferred because it will facilitate fabrication of a film having excellent lamination strength, thermal shrinkage, and thickness nonuniformity.

It is preferred that the upper limit of the range in values for the intrinsic viscosity of the polyester resin recycled by the market and/or society and including PET bottles be 0.90 dl/g, more preferred that this be 0.80 dl/g, still more preferred that this be 0.75 dl/g, and particularly preferred that this be 0.69 dl/g. Above 0.90 dl/g is not so preferred, as it would cause there to be situations in which the resin would not be easily discharged from the extruder, and productivity would be lowered.

It is preferred that the lower limit of the range in values for the content of polyester resin recycled by the market and/or society and including PET bottles as a fraction of the total amount of polyester resin making up the film at a biaxially oriented polyester film in accordance with the present invention be 50 wt%, more preferred that this be 70 wt%, still more preferred that this be 90 mass%, and particularly preferred that this be 100 wt%. From the standpoint of ability to contribute to preservation of the environment, below 50 wt% is not so preferred, because this would cause fractional content to be too low to permit utilization as recycled resin. Note that polyester resin recycled by the market and/or society and including PET bottles may also be used as masterbatch (resin in which content is of high concentration) such as may be employed when adding inorganic particles and/or other such lubricants or additives for the purpose of improving functionality as a film.

Biaxially Oriented Polyester Film and Film Roll Production Method

Biaxially oriented polyester film in accordance with the present invention may for example be obtained by causing chips of the foregoing polyester resin recycled by the market and/or society and including PET bottles, and chips of the polyester resin composition that contains polyester resin(s) as primary constituent thereof, to be supplied to and mixed at an extruder which is provided with a hopper, causing this to be melt extruded by the extruder to form an unstretched sheet, and carrying out stretching of that unstretched sheet.

Although preferred examples are described below, it should be understood that there is no limitation with respect thereto.

A biaxially oriented polyester film in accordance with the present invention may have a laminated structure in which there is a single layer, or in which there are two layers, three layers, or four or more layers. Where the structure is such that there are two or more layers, while the constituents of each layer will be the polyester-type resin, and the inorganic particles, and furthermore the resin(s) other than the polyester-type resin that are as described above, the types and amounts of constituents contained therein will be different for each of the respective mutually adjacent layers.

Where the structure is such that there is a single layer, surface layer (A) in accordance with the present invention will be the entire biaxially oriented polyester film.

Where the structure is such that there are two layers, surface layer (A) in accordance with the present invention will be either one or both of the layers. Where the structure is such that there are three layers, surface layer (A) in accordance with the present invention will be the layer(s) at either one or both sides thereof.

Where the structure is such that there are three layers, if the compositions making up the film are represented by A, A', B, and C, then whereas it will be possible, for example, for constitutions in the form of A/B/C, A/B/A, and A/B/A' to be assumed, in situations where there is no particular need to vary the surface properties at the two faces, a constitution in the form of A/B/A, for which the design is such that the layers at either side have the same composition, is preferred, as it may be easily manufactured. Here, A and A' indicate compositions that are not identical.

In particular, when the structure is such that there are three layers, even where there are no inorganic particles present at base layer (B), as it will be possible to control the surface roughness of the film by controlling the amount of particles added to surface layer (A) only, permitting a smaller amount of inorganic particles to be contained within the film, this is preferred. This is also so as to be able to contribute to improvement of the situation whereby aroma retention might otherwise be reduced due to escape of olfactory components by way of voids (spaces) that tend to arise at boundaries between polyester resin and inorganic particles.

Moreover, to the extent that doing so would not adversely effect properties at the film surface, causing raw material recovered from edge portions produced during the film forming operation, and/or other raw material or the like recycled from the film forming operation, to be mixed within and used at base layer (B) at appropriate time(s) will be easy and will also be superior in terms of cost.

The lower limit of the range in values for amount of particles contained within surface layer (A) at a biaxially oriented polyester film in accordance with the present invention is 600 ppm weight, 700 ppm weight being more preferred, and 800 ppm mass being particularly preferred. When the amount of particles contained therewithin is less than 600 ppm weight, this is not so preferred, as there will be a tendency for arithmetic mean height Sa at the surface of the film to be low, and there are situations in which this would cause reduction in lubricity. Furthermore, there would also be a tendency for maximum projecting height Sp at the film surface to be reduced and for purging of air entrained therebetween when this is being wound up into a roll to be nonuniform, causing occurrence of poor external appearance in the form of wrinkling and pock marks over bubbles, and there would be a tendency for ability to be wound up into a roll to deteriorate.

When mixing resin chips serving as raw material, it is preferred that this be performed by causing chips of the polyester resin recycled by the market and/or society and including PET bottles to be supplied to a hopper from above, causing chips of the foregoing polyester resin composition to be supplied thereto by way of plumbing disposed within the hopper and having an outlet immediately above the extruder (hereinafter sometimes referred to as "inner piping"), and causing the two types of chips to be mixed and melt extruded therefrom. Whereas when chips of polyester resin recycled by the market and/or society and including PET bottles and chips of polyester resin composition are placed in a mixed state into a hopper above an extruder there is a possibility that resin chips of differing specific gravity and/or chip shape will undergo raw material segregation within the hopper, there being much concern that there will be occurrence of raw material segregation especially at locations where the inner wall of the hopper is not vertical (diagonal portions), by causing the polyester resin composition to be supplied in direct fashion by way of inner piping to a location within the hopper and immediately above the extruder, it will be possible even where specific gravity and/or chip shape differs to reduce raw material segregation, making it possible to carry out industrial production of polyester film in stable fashion.

A specific example of a mixing procedure is shown in FIG. 1. FIG. 1 is a schematic diagram showing an exemplary relationship between inner piping 3 and extruder 2 which is provided with hopper 1. As shown in FIG. 1, resin other than chips of polyester resin recycled by the market and/or society and including PET bottles which is the primary ingredient of a polyester film in accordance with the present invention is supplied thereto by way of inner piping 3, and chips of polyester resin composition are supplied thereto from above hopper 1. In addition, because outlet 4 of inner piping 3 is immediately above the extruder (or to be more precise, is immediately above resin supply port 5 of extruder 2), it is possible to cause the ratio in which the raw materials are mixed to be maintained at a constant value.

As a result of adoption of such means whereby the polyester resin composition is supplied in direct fashion by way of inner piping to a location within the hopper and immediately above the extruder, it is possible to obtain an effect whereby variation in surface roughness is suppressed.

At the time that the polyester resin recycled by the market and/or society and including PET bottles and the polyester resin composition are melt extruded, it is preferred that a hopper dryer, paddle dryer, or other such dryer or vacuum dryer be used to carry out drying thereof. After the polyester resin recycled by the market and/or society and including PET bottles and the polyester resin composition have thus been dried, the extruder is used to cause this to be melted at a temperature which is not less than the melting point of the polyester resin and which is 200° to 300° C, and to cause this to be extruded therefrom in a film-like state. Alternatively, the polyester resin, particles, and, where necessary, additives may be sent thereto by different extruders, and after these are combined, may be mixed and melted, and extruded in sheet-like fashion.

When extruding the molten resin composition, this may be carried out by adopting the T die method, tubular method, and/or any other such known method as desired.

In addition, by quenching the sheet-like molten polyester resin after it has been extruded, it is possible to obtain an unstretched sheet thereof. As method for quenching the molten polyester resin, a method in which the molten polyester resin from the orifice fixture is cast onto a rotating drum where it is quenched and allowed to solidify to obtain a substantially unoriented resin sheet might be favorably adopted. It is preferred that the temperature of the rotating drum be set so as to be not greater than 40° C.

Moreover, as a result of causing the unstretched sheet that is obtained to undergo a combination of operations such as the following biaxial stretching operation in which stretching is carried out in the machine direction and in the transverse direction, heat setting operation, thermal relaxation operation, and so forth, it is possible to obtain a biaxially oriented polyester film in accordance with the present invention.

Detailed description follows. "Machine direction" means the direction in which the unstretched sheet is made to travel; "transverse direction" means a direction perpendicular with respect thereto.

While it is possible for the stretching method to be either simultaneous biaxial stretching in which stretching in the machine direction and in the transverse direction are carried out simultaneously or sequential biaxial stretching in which stretching in either the machine direction or the transverse direction is carried out first, due to the fact that it will permit a high film formation speed for increased productivity, and due to the fact that it will permit the biaxially oriented polyester film that is ultimately obtained to be superior in terms of thickness uniformity, sequential biaxial stretching is most preferred.

Here, "film formation speed" means the rate of travel (m/min) of the biaxially oriented polyester film when it is being wound up into a master roll following passage through the stretching operation.

When the unstretched sheet is being stretched in the machine direction, using the glass transition temperature (hereinafter "Tg") of polyester resin as index, it is preferred that the stretching temperature be within the range (Tg + 15)° to (Tg + 55)° C, and it is preferred that the stretching ratio be within the range 4.2x to 4.7x.

When temperature during stretching is not greater than (Tg + 55)° C and this is moreover not less than 4.2x, this will be preferred, as it will facilitate causing maximum projecting height Sp to be a value that is not greater than the upper limit of the range in values at (1), above, and moreover, as it will cause molecular orientations in the machine direction and transverse direction to be well-balanced, it will reduce differences between physical properties in the machine direction and transverse direction. Furthermore, this is also preferred because it will also cause planarity of the biaxially stretched polyester film that is obtained to be good.

On the other hand, during stretching in the machine direction, when temperature is not less than (Tg + 15)° C and stretching ratio is moreover not greater than 4.7x, this will facilitate causing maximum projecting height Sp to be a value that is not greater than the upper limit of the range in values at (1), above. This is preferred because it will prevent the tensile stress (bowing phenomenon) which is produced in a direction opposite the direction of travel of the film from becoming excessive during the thermal relaxation operation.

Furthermore, when carrying out stretching in the machine direction, a method in which stretching is carried out not in one step but in which stretching is divided into two, three, or four or more steps that are carried out between/among a plurality of rollers is preferred due to the fact that it will make it possible to achieve smaller differences in physical properties in the transverse direction of the film, because it will make it possible to achieve a high stretching ratio in the machine direction without causing the stretching rate to be so high. From the standpoints of effect, facilities, and cost, carrying out stretching in two or three steps is preferred.

Furthermore, when carrying out stretching in the machine direction, by carrying out the first and second steps at low stretching ratios, this will make it possible to form a plurality of polymer structures that are weakly oriented in the machine direction without causing occurrence of crystallization, and by moreover carrying out the third step on that film at a high stretching ratio, this will produce strong orientation in the machine direction and cause the stretching stress during stretching to be high, which will facilitate control of production of coarse projections due to agglomeration of particles, and facilitate causing maximum projecting height Sp at the film surface to be a value that is not greater than the foregoing upper limit of the range in values therefor.

The film obtained by carrying out stretching of the unstretched sheet in the machine direction thereof may, where necessary, be made to undergo corona treatment, plasma treatment, and/or other such surface treatment, following which, so as to impart it with slipperiness, adhesiveness, antistatic properties, and/or other such functionalities, a resin dispersion and/or a resin solution may be applied to at least one face of the film.

Where the film obtained by carrying out stretching of the unstretched sheet in the machine direction thereof is to be stretched in the transverse direction, this may be guided to a tenter apparatus, where the two ends of the film obtained as a result of causing the unstretched sheet to be stretched in the machine direction are gripped by clips, hot air may be used to heat the film to a prescribed temperature, following which the film may be stretched in the transverse direction by increasing the distance between the clips as it is transported in the machine direction.

When temperature during stretching in the transverse direction is not less than Tg + 5° C, as fracture will tend not to occur during stretching, this is preferred.

Furthermore, when temperature during stretching is not greater than Tg + 40° C, because this will facilitate carrying out uniform stretching in the transverse direction and will reduce the tendency for occurrence of much unevenness in thickness in the transverse direction, as there will be less tendency for occurrence of variation in the transverse direction of roll hardness at the film roll surface, this is preferred.

It is more preferred that this be not less than Tg + 8° C but not greater than Tg + 37° C, and still more preferred that this be not less than Tg + 11° C but not greater than Tg + 34° C.

It is preferred that the stretching ratio in the transverse direction of the film obtained as a result of causing the unstretched sheet to be stretched in the machine direction be not less than 4.0x but not greater than 6x.

When the stretching ratio in the transverse direction is not less than 4.0x, not only will this make it easier to obtain a high yield in terms of material balance, and in addition to the fact that there will be no reduction in mechanical strength, as there will be less tendency for occurrence of much unevenness in thickness in the transverse direction, and as there will be less tendency for occurrence of variation in roll hardness in the transverse direction of the film roll, this is preferred. It is more preferred that the stretching ratio in the transverse direction be not less than 4.1x, and even more preferred that this be not less than 4.2x.

Furthermore, when the stretching ratio in the transverse direction is not greater than 6.0x, as fracture will tend not to occur during stretching of film formation, this is preferred.

Following the transverse-direction stretching operation, a heat setting operation is carried out, it being preferred that the heat setting temperature for the film obtained by causing the film obtained as a result of stretching of the unstretched sheet in the machine direction to be stretched in the transverse direction be not less than 240° C but not greater than 250° C.

When the heat setting temperature is not less than 240° C, this is preferred, because thermal shrinkage will not be too high in either the machine direction or the transverse direction, and thermal dimensional stability during secondary treatment will be satisfactory.

On the other hand, when the heat setting temperature is not greater than 250° C, this is preferred, because there will be less tendency for bowing to increase.

Moreover, a thermal relaxation treatment operation is carried out, it being possible to carry this out either separately from the heat setting operation after the heat setting operation has been carried out, or simultaneous with the heat setting operation. It is preferred that the percent relaxation in the transverse direction of the film during the thermal relaxation treatment operation be not less than 4% but not greater than 8%.

When the percent relaxation is not less than 4%, this is preferred, because thermal shrinkage will not be too high in the transverse direction of the biaxially oriented polyester film that is obtained, and dimensional stability during secondary treatment will be satisfactory.

On the other hand, when the percent relaxation is not greater than 8%, this is preferred, because it will prevent the tensile stress (bowing phenomenon) which is produced in a direction opposite the direction of travel of the film at the central portion in the transverse direction of the film from becoming excessive during the thermal relaxation operation, and prevent the fractional amount of fluctuation in film thickness in the transverse direction from becoming too large.

At the thermal relaxation treatment operation, during the time until the film obtained by causing the film obtained as a result of stretching of the unstretched sheet in the machine direction to be stretched in the transverse direction undergoes shrinkage as a result of thermal relaxation, because the forces constraining it in the transverse direction might lessen, causing it to droop under its own weight, or any concomitant flow of hot air blown from nozzles installed above and below the film might cause the film to swell, the state of the film is such that it is extremely susceptible to fluctuations in the vertical direction, and there is a tendency for there to be large fluctuations in the amount of change of differences in orientation angle and/or diagonal thermal shrinkage of the biaxially stretched polyester film that is obtained.

As method for mitigation thereof, adjustment of the airspeed of hot air blown from nozzles thereabove and therebelow to cause parallelism of the film to be maintained may be cited as an example.

Moreover, so long as it does not impair the object of the present invention, a biaxially oriented polyester film in accordance with the present invention may be made to undergo corona discharge treatment, glow discharge treatment, flame treatment, and/or surface roughening treatment, and/or may be made to undergo publicly known anchor coat treatment, printing, ornamentation, and/or the like.

A wide biaxially oriented polyester film that has undergone stretching and film formation in accordance with the foregoing method(s) may be wound into a roll using a winder apparatus to fabricate a master roll. It is preferred that width of the master roll be not less than 5000 mm but not greater than 10000 mm. When roll width is not less than 5000 mm, as the cost per unit area of the film during the slitting operation, vapor deposition treatment, and/or printing treatment that follow will be low, this is preferred.

It is preferred that the wound length of the master roll be not less than 10000 m but not greater than 100000 m. When the wound length of the roll is not less than 5000 m, as the cost per unit area of the film during the slitting operation, vapor deposition treatment, printing treatment, and/or other such secondary processing that follows will be low, this is preferred.

Furthermore, it is preferred that the width of film rolls produced by slitting from the master roll be not less than 400 mm but not greater than 3000 mm. When roll width is not less than 400 mm, as there will be less inconvenience in terms of the frequent changing of film rolls that would otherwise need to be performed during the printing operation, this is preferred from the standpoint of cost. Furthermore, while it is preferred that roll width be large, when this is not greater than 3000 mm, as not only will roll width not be excessively large, but roll weight will also not be excessively large, and there will be no worsening of handling characteristics, this is preferred.

It is preferred that wound length of film rolls be not less than 2000 m but not greater than 65000 m. When wound length is not less than 2000 m, as there will be less inconvenience in terms of the frequent changing of film rolls that would otherwise need to be performed during the printing operation, this is preferred from the standpoint of cost. Furthermore, while it is preferred that wound length be large, when this is not greater than 65000 m, as not only will roll diameter not be excessively large, but roll weight will also not be excessively large, and there will be no worsening of handling characteristics, this is preferred.

While there is no particular limitation with respect to the roll core employed in the film roll, this is ordinarily of 3-inch (37.6-mm), 6-inch (152.2-mm), 8-inch (203.2-mm) diameter or other such size and made of plastic or made of metal, or a cylindrical roll core made of a cardboard tube may be used.

Biaxially Oriented Polyester Film and Film Roll Characteristics

In accordance with the present invention, a film roll, wound up at which there is a biaxially oriented polyester film comprising a polyester resin composition comprising particles and polyester resin recycled by the market and/or society and including PET bottles, it is preferred that all of conditions (1) through (4), below, be satisfied. Detailed description will be given with respect to each.

(1) Maximum projecting height Sp at at least one film surface is not greater than 3.0 μm.
(2) Haze is not greater than 10% for a film thickness of 12 μm.
(3) Purge time for air between front and back surfaces of the film is not greater than 14 seconds.
(4) Variation in arithmetic mean height Sa and in maximum projecting height Sp when sampling is carried out at 1000 m intervals from a surface layer of the film roll to a roll core thereof in a machine direction of the film are each not greater than 40%.

(Variation is given by Formula [1], below, when maximum value is taken to be Xmax, minimum value is taken to be Xmin, and average value is taken to be Xave.

$$\text{Variation (\%)} = 100 \times (\text{Xmax} - \text{Xmin})/\text{Xave} \qquad [1]\ )$$

Maximum Projecting Height Sp

It is preferred that maximum projecting height Sp at at least one face of a biaxially oriented polyester film in accordance with the present invention be not greater than 3.0 μm, more preferred that this be not greater than 2.5 μm, and still more preferred that this be not greater than 2.0 μm. When maximum projecting height Sp is not greater than 3.0 μm, as impairment of film quality-such as would be the case were there to be poor printed external appearance, bad design characteristics, or the like due to occurrence of printing voids or the like as a result of formation of coarse projections-will tend not to occur, this is preferred.
When variation in maximum projecting height Sp or in arithmetic mean height Sa in the machine direction of the film roll exceeds 40%, there is a possibility that there will be occurrence of variation in the quality of packaging material manufactured as a result of secondary processing carried out on the biaxially oriented polyester film roll.
An arithmetic mean height Sa at at least one face of a biaxially oriented polyester film in accordance with the present invention is not greater than 0.10 μm, preferably not greater than 0.07 μm, and still more preferably not greater than 0.05 μm. When arithmetic mean height Sa exceeds 0.10 μm or lower, there is a possibility that there will be impairment of film quality such as would be the case were there to be poor printed external appearance, worsening of design characteristics, or the like due to occurrence of printing voids or the like.

Haze

Haze for a film thickness of 12 μm at a biaxially oriented polyester film in accordance with the present invention is not greater than 10%, not greater than 5% being more preferred, and not greater than 4% being still more preferred. When haze for a film thickness of 12 μm exceeds 10%, there will be worsening of printed external appearance, foreign matter will tend to go undetected when processing is proceeding at high speed, and it will tend to be difficult to obtain adequate quality.

Air Purge Time

It is preferred that purge time for air between the front and back surfaces of a biaxially oriented polyester film in accordance with the present invention be not greater than 14 seconds, more preferred that this be not greater than 13 seconds, still more preferred that this be not greater than 12 seconds, and particularly preferred that this be not greater than 10 seconds. When air purge time exceeds 14 seconds, at times when the film is being wound up into a roll such as takes place during manufacturing operations and when carrying out rewinding, slitting, and the like, there will be a tendency for purging of air entrained therebetween when this is being wound up into a roll to be nonuniform, and for this to cause occurrence of poor external appearance in the form of wrinkling and bubble-like pock marks.

Coefficient of Dynamic Friction

It is preferred that the coefficient of dynamic friction between one face of a biaxially oriented polyester film in accordance with the present invention and the opposite face thereof be not less than 0.20 but not greater than 0.60.
When this is not less than 0.20, there will not be excessive slippage between faces of the film, there will tend not to be occurrence of wrinkling at the film roll when a winder apparatus is being used to wind the film up into a roll during film manufacturing or when carrying out slitting, and secondary processing characteristics will tend not to worsen. It is more preferred that this be not less than 0.30.
Furthermore, when this is not greater than 0.60, because there will be slippage between faces of the film, there will tend not to be occurrence of misaligned winding of the film roll when a winder apparatus is being used to wind the film up into a roll during film manufacturing or when carrying out slitting, and secondary processing characteristics will tend not to worsen. It is more preferred that this be not greater than 0.50, and most preferred that this be not greater than 0.45.

Coefficient of Static Friction

It is preferred that the coefficient of static friction between one face of a biaxially oriented polyester film in accordance with the present invention and the opposite face thereof be not less than 0.20 but not greater than 0.60.
When this is not less than 0.20, there will not be excessive slippage between faces of the film, there will tend not to be occurrence of wrinkling at the film roll when a winder apparatus is being used to wind the film up into a roll during film manufacturing or when carrying out slitting, and secondary processing characteristics will tend not to worsen. It is more preferred that this be not less than 0.30.
Furthermore, when this is not greater than 0.60, because there will be slippage between faces of the film, there will tend not to be occurrence of misaligned winding of the film roll when a winder apparatus is being used to wind the film up into a roll during film manufacturing or when carrying out slitting, and secondary processing characteristics will tend not to worsen. It is more preferred that this be not greater than 0.50, and most preferred that this be not greater than 0.45.

Inorganic Particle Content

It is preferred that the total amount of inorganic particles contained within all layers of a biaxially oriented polyester film in accordance with the present invention be not less than 100 ppm but not greater than 1000 ppm, and more preferred that this be not greater than 800 ppm. When inorganic particle content is less than 100 ppm, this will tend to cause lubricity to decrease, leading to occurrence of trouble when carrying out winding, rewinding, slitting, or the like or during travel of the roll during the course of film manufacturing operations, and will tend to cause production of scratches at the film surface, occurrence of wrinkles in the roll, and/or generation of static electricity. When inorganic particle content exceeds 1000 ppm, caution should be exercised, since there will be a tendency for maximum projecting height Sp and arithmetic mean height Sa at the film surface to become too high. Furthermore, there will be a tendency for voids within the film to increase, which can cause decrease in transparency.

Film Thickness

It is preferred that film thickness of a biaxially oriented polyester film in accordance with the present invention be 5 μm to 40 μm. When this is not less than 5 μm, as there will not be reduction in the stiffness or strength of the film, and there will tend not to be generation of wrinkles at the film roll when this is being wound up into a roll by a winder apparatus, this is preferred. On the other hand, within the range for which film thickness is not greater than 40 μm, it will be possible to obtain adequate strength and stiffness, and the decreased thickness will be preferred from the standpoint of cost. It is more preferred that thickness of the film be 8 μm to 30 μm, and particularly preferred that this be 9 μm to 20 μm.

Number of Defects

From the standpoint of film grade, it is preferred that a biaxially oriented polyester film in accordance with the present invention be such that there are less than 20 foreign objects that are 1 mm or larger in size per 100 $m^2$ of film, it being fair to say where this is the case that such a film is of good grade despite the fact that it employs reconstituted polyester raw material.

Working Examples

A. Polyester resin evaluation methods were as follows.

Glass Transition Tg

A differential scanning calorimetric analyzer (Model DSC6220 manufactured by SII NanoTechnology Inc.) was used to melt a 5-mg resin sample in a nitrogen atmosphere until a temperature of 280° C was reached, this was maintained thereat for 5 minutes, was thereafter quenched in liquid nitrogen, and measurement was carried out under conditions of a temperature rise rate of 20° C/minute from room temperature.

Intrinsic Viscosity (IV)

0.2 g of polyester resin was dissolved in 50 ml of a phenol/1,1,2,2-tetrachloroethane (60/40 (wt% ratio)) solvent mixture, measurement being carried out using an Ostwald viscometer at 30° C. Units were dl/g.

Amounts of Terephthalic Acid and Isophthalic Acid Components Contained Within Polyester Making Up Film and Polyester Raw Material

Sample solution was prepared by dissolving in a solvent containing a 10:1 (by volume) mixture of Chloroform D (manufactured by Yurisop) and Trifluoroacetic Acid D1 (manufactured by Yurisop), and using NMR ("Gemini-200"; manufactured by Varian, Inc.) to measure proton NMR of the sample solution under measurement conditions of temperature 23° C and 64 integrated iterations. During NMR measurement, intensities of prescribed proton peaks were calculated, and the amounts (mol%) of the terephthalic acid component and the isophthalic acid component contained within 100 mol% of the acid component were calculated.

B. Polyester film evaluation methods were as follows.

Film sampling for evaluation of the characteristics shown below other than evaluation of film roll wrinkles and foreign matter (number of defects) within the film and variation (%) in maximum projecting height Sp and arithmetic mean height Sa were carried out at the surface layer of the biaxially oriented polyester film roll of the present invention.

Film Thickness

Measurement was carried out using a dial gauge in accordance with the method at JIS K7130-1999 A.

Haze

Measurement of haze was carried out by cutting the film that was obtained into samples of area 5 cm in the machine direction × 5 cm in the transverse direction, and using a hazemeter (NDH5000) manufactured by Nippon Denshoku Industries Co., Ltd., in accordance with JIS-K7136. Measurements were carried out three times, and the average thereof was determined.

Arithmetic Mean Height Sa and Maximum Projecting Height Sp

Measurement of arithmetic mean height Sa (μm) and maximum projecting height Sp (μm) was carried out by cutting the film that was obtained into samples of area 10 cm in the machine direction × 10 cm in the transverse direction, and using a white light laser interferometer (NewView 8300) manufactured by Zygo Corporation to carry out scanning under the following observation conditions, in accordance with ISO 25178. Surface locations exclusive of regions in which there was unmelted matter, dust, or other such foreign matter were used as measurement targets.

Measurement was carried out at 10 arbitrary measurement locations on the 10 cm × 10 cm sample, the average thereof being taken for each the arithmetic mean height Sa and the maximum projecting height Sp.

Regarding variation (%) in maximum projecting height Sp and arithmetic mean height Sa, at the polyester film roll (width 800 mm; wound length 30,000 m) that was obtained, sampling was carried out at 1000 m intervals from the surface layer of the film roll to the roll core thereof in the machine direction. At each film for which sampling was carried out, measurement was performed under the foregoing conditions. Taking the maximum value of the arithmetic mean height Sa that was obtained to be Xmax (N), the minimum value thereof to be Xmin (N), and the average value thereof to be Xave, the variation in the machine direction given by Formula [1] was determined.

Observation Conditions

- Objective lens: 10x
- Zoom lens: 1x
- Field of view: 0.82 mm × 0.82 mm
- Sampling pitch: 0.803 μm
- Assumed measurement time: 4 seconds
- Type: Surface
- Mode: CSI
- Z resolution: High
- Scan length: 20 μm

- Camera mode: 1024 × 1024 @ 100 Hz
- Shutter speed: 100%
- Amount of light: 1.3%
- Optional settings:

    SureScan Off
    SmartPsi Averages 4
    Noise reduction

- Optional signal processing:

    Fringe order analysis Advanced
    Fringe elimination ON

Coefficient of Dynamic Friction and Coefficient of Static Friction

A film sample of area 400 mm in the machine direction × 100 mm in the transverse direction was prepared by cutting this from the film that was obtained. This was aged for 12 hours under ambient conditions of 23° C and 65% RH, and this was divided into a test piece for test table use that was 300 mm in the machine direction × 100 mm in the transverse direction, and a test piece for sliding piece use that was 100 mm in the machine direction × 100 mm in the transverse direction.

The test piece for test table use was secured to the test table, and the test piece for sliding piece use was such that affixed to the bottom face (which was square and had an area of size 39.7 $mm^2$) of the sliding piece so as to cause the respective faces to be in mutually opposed contact was a 1.5-kg load made of metal.

In accordance with JIS K-7125, a tensile test apparatus (Tensilon RTG-1210 manufactured by A&D Company, Limited) was used to respectively measure coefficient of static friction and coefficient of dynamic friction under conditions of 65% RH and 23° C at a sliding speed of 200 mm/minute between test pieces, the average of three measurements being used.

Foreign Matter (Number of Defects) Within Film

Film that had been wound into a roll of width 800 mm and wound length 10000 m (8000 square meters) was made to undergo rewinding by means of a rewinding apparatus. As this was being rewound, a defect detection apparatus (Model F Max Mr) manufactured by Futec Inc. was used to investigate the number of defects. In addition, the number of defects of size 1 mm or larger in one of either the machine direction or the transverse direction was determined. The number of defects per 100 square meters was determined based on Formula [3], below, from the total number of defects.

$$\text{Number of defects per 100 square meters} = \text{Total number of defects} \div 80 \qquad [3]$$

Evaluation was carried out in accordance with the following criteria based on the number of foreign objects that were measured within the film.

GOOD: Number of foreign objects within film was less than 20 defects/$100m^2$
BAD: Number of foreign objects within film was greater than or equal to 20 defects/$100m^2$

Total Amount of Inorganic Particles Contained Within All Layers of Film Determined using an x-ray fluorescence analyzer (Supermini 200 manufactured by Rigaku Corporation) on the film that was obtained based on calibration curves that had been determined in advance.

Air Purge Time

As shown in FIG. 3, film 4 was placed on platen 1. Film retainer 2 was then placed atop film 4, and was secured thereover so as to secure film 4 while applying tension thereto. Film 5 was then placed atop film retainer 2, being placed over film 4 in such fashion as to cause the face thereof opposite the top face of film 4 as it lay atop platen 1 to face down. Film retainer 8 was then placed atop film 5, and screws 3 were further used to secure film retainers 8, 2 and platen 1.

Vacuum pump 6 and cavity 2a provided at film retainer 2 were then connected by way of pipe 7 and pores 2c provided at film retainer 2. In addition, vacuum pump 6 was driven, causing tension to be applied to film 5 as a result of its having been sucked into cavity 2a. Furthermore, the mutually overlapping faces of film 4 and film 5 were also simultaneously subjected to vacuum by way of pores 2d provided in circumferential arrangement at film retainer 2, causing film 4 and film 5 to begin to adhere starting from the peripheral portions of the overlapping faces thereof.

The fact that they were adhering could easily be determined by means of the interference fringes that were observable from above the overlapping faces. In addition, after interference fringes appeared at the peripheral portions of the overlapping faces of film 4 and film 5, the interference fringes spread across the front faces of the overlapping faces, the time (seconds) until this movement stopped being measured, this time (seconds) being taken to be the air purge time. Note that the two films were replaced and measurements were repeated for a total of 5 trials, the average value thereof being used.

Evaluation of Film Roll Wrinkles

The biaxially oriented polyester film that was formed was wound into a roll of wound length 12000 m and width 800 mm, visual inspection being employed to evaluate wrinkles at the surface layer of the roll based on the following criteria. Those judged GOOD or FAIR were determined to have received a passing grade.

- GOOD: No wrinkles
- FAIR: Small wrinkles were present but application of tension of on the order of 20 N/m to unwound film caused wrinkles to disappear
- BAD: Large wrinkles were present that did not disappear despite application of tension of on the order of 20 N/m to unwound film

Details regarding the raw material resin chips used at the present Working Examples and Comparative Examples are indicated below.

Polyester Resin A: Mechanically recycled polyester resin

The following method was used to synthesize mechanically recycled polyester resin reconstituted from PET bottles that was used to fabricate biaxially oriented polyester film as described below.

After any beverages or other such foreign matter remaining in PET bottles for beverage use were washed away therefrom, these were pulverized to obtain flakes. The flakes that were obtained were made to undergo cleaning while agitating in 3.5 wt% sodium hydroxide solution, conditions at this time being flake concentration 10 wt%, 85° C, and 30 minutes. Following alkali cleaning, the flakes were removed therefrom, and were made to undergo cleaning while agitating using distilled water, conditions at this time being flake concentration 10 wt%, 25° C, and 20 minutes. The distilled water was replaced and this rinsing in water was repeated two more times. Following rinsing in water, the flakes were dried, following which these were melted in an extruder, and this was made to undergo separation by filtration to remove successively more finely sized foreign matter by causing the filter to be changed to one having successively more finely sized openings, this being done two times, and on the third time, separation by filtration was carried out using the filter having the smallest openings, these being 50 μm, to obtain Polyester Resin A having an intrinsic viscosity of 0.69 dl/g and a fractional isophthalic acid content of 1.5 mol%.

Polyester Resin B: Mechanically recycled polyester resin

Except for the fact that alkali cleaning was not carried out at the operation in which the foregoing Polyester Resin A was manufactured, this was carried out in similar fashion as at the foregoing Polyester Resin A to obtain Polyester Resin B having an intrinsic viscosity of 0.69 dl/g and a fractional isophthalic acid content of 1.5 mol%.

Polyester Resin C: Chemically recycled polyester resin

The following method was used to synthesize chemically recycled polyester resin reconstituted from PET bottles that was used to fabricate biaxially oriented polyester film as described below.

A bale of PET bottles that had been separated, collected, and recovered were fed into a wet grinder, pulverization was carried out while 1,000 liters of water to which 500 g of liquid kitchen detergent had been added was made to circulate within the foregoing wet grinder, a gravimetric separator connected to the grinder was used to cause sedimentation of metal, sand, glass, and other such substances of high specific gravity, and flakes were extracted from the fraction at the upper layer thereof. These flakes were washed with pure water and made to undergo centrifugal dewatering to produce recovered flakes.

30 kg of the foregoing recovered flakes that had been melted while in a nondry state were loaded into an autoclave equipped with an agitator and in which there was a liquid mixture of 150 g of zinc acetate dihydrate and 150 kg of ethylene glycol that had been preheated, and following removal of the fractions of boiling point lower than ethylene glycol such as acetic acid and water, a reflux condenser was used to react this for 4 hours at a temperature of 195° to 200° C.

Following completion of the reaction, the temperature of the contents of the reaction vessel was lowered to 97° to 98° C, and a filter was used to carry out hot filtration to remove suspended matter and sediment.

Following hot filtration, the filtrate was further cooled, and after confirming that the crude BHET was completely dissolved, prepurification treatment was performed by causing this to pass through an activated carbon bed and then through an anion/cation exchange mixed bed for 30 minutes at 50° to 51° C.

The foregoing prepurification-treated solution was again loaded into an agitating-type autoclave, and this was heated to distill the excess ethylene glycol therefrom at normal pressure and 198° C to obtain a concentrated BHET melt.

The concentrated BHET melt that was obtained was allowed to cool naturally while being agitated in a nitrogen gas atmosphere, and this was thereafter removed from the autoclave to obtain a concentrated BHET chip block.

This chip block was again heated to 130° C and melted, following which this was supplied by means of a metering pump to a thin film vacuum evaporator, where evaporation and cold condensation were carried out to obtain purified BHET.

This purified BHET was used as raw material to carry out melt polymerization to obtain chemically recycled Polyester Resin C having an intrinsic viscosity of 0.696 dl/g.

Polyester Resin D

As PET resin derived from fossil fuel that was used to fabricate biaxially oriented polyester film as described below, terephthalic acid // ethylene glycol = 100 // 100 (mol%) (intrinsic viscosity 0.62 dl/g; manufactured by Toyobo Co., Ltd.) was used.

Polyester Resin E

The temperature of an esterification reaction vessel was increased, and at the point in time when 200° C was reached, a slurry consisting of terephthalic acid [86.4 parts by mass] and ethylene glycol [64.4 parts by mass] was loaded thereinto, and catalyst in the form of antimony trioxide [0.017 part by mass] and triethylamine [0.16 part by mass] was added thereto while this was agitated. This was then heated and increased in temperature, and a pressure esterification reaction was carried out under the conditions of gauge pressure 0.34 MPa and 240° C.

The interior of the esterification reaction vessel was thereafter returned to normal pressure, and magnesium acetate tetrahydrate [0.071 part by mass], and then trimethyl phosphate [0.014 part by mass], were added thereto. Moreover, after 15 minutes had elapsed, temperature was increased to 260° C, following which trimethyl phosphate [0.012 part by mass], and then sodium acetate [0.0036 part by mass], were added thereto, following which, 15 minutes thereafter, a highpressure disperser was used to carry out dispersion treatment, and 0.7 part by weight, based on particle content, of an ethylene glycol slurry of irregularly shaped silica particles of average particle diameter 2.5 μm was further added thereto. These silica particles were the particles obtained when an ethylene glycol slurry was prepared in advance, this was subjected to centrifugal separation processing, 35% of the coarse particulate fraction was removed, following which filtration treatment as carried out using a metal filter having 5-μm openings. After 15 minutes had elapsed, esterification reaction product that was obtained was transferred to a polycondensation reaction vessel, and this was made to undergo a polycondensation reaction under reduced pressure at 280° C to obtain Polyester Resin E having an intrinsic viscosity of 0.62 dl/g.

Polyester Resins F, G, H, I, and J

Except for the fact that particle content and weight average particle diameter of silica particles were varied, similar methods as at Polyester Resin D were employed to obtain Polyester Resins F, G, H, I, and J.

Raw material resin chips were as indicated at TABLE 1. Note that the following abbreviations are used in the table.

| | |
|---|---|
| TPA: | Terephthalic acid |
| EG: | Ethylene glycol |

TABLE 1

| | Dicarboxylic acid component | Polyhydric alcohol component | isophthalic acid | Silica | | Fractional content of SiO2 | Intrins ic viscosity |
|---|---|---|---|---|---|---|---|
| | TPA | EG | | Shape | Weight average particle diameter | | |
| | mol% | mol% | mol% | - | μm | ppm | dl/g |
| Polyester Resin A | 98 | 100 | 1.5 | - | - | - | 0.69 |
| Polyester Resin B | 98 | 100 | 1.5 | - | - | - | 0.69 |
| Polyester Resin C | 100 | 100 | 0 | - | - | - | 0.67 |
| Polyester Resin D | 100 | 100 | 0 | - | - | - | 0.62 |
| Polyester Resin E | 100 | 100 | 0 | Irregularly shaped | 2.5 | 7000 | 0.62 |
| Polyester Resin F | 100 | 100 | 0 | Irregularly shaped | 2.5 | 2000 | 0.62 |
| Polyester Resin G | 100 | 100 | 0 | Irregularly shaped | 3 | 10000 | 0.61 |
| Polyester Resin H | 100 | 100 | 0 | Irregularly shaped | 3.5 | 10000 | 0.62 |
| Polyester Resin I | 100 | 100 | 0 | Irregularly shaped | 4 | 10000 | 0.62 |
| Polyester Resin J | 100 | 100 | 0 | Irregularly shaped | 2.5 | 15000 | 0.61 |

Working Example 1

Three extruders were used to form a film having a three-layer constitution. Base layer (B) was such that Polyester Resin A was 95.0 mass% and Polyester Resin D was 5.0 mass%; surface layer (A) was such that Polyester Resin A was 87.5 mass% and Polyester Resin D was 12.5 mass%. Here, Polyester Resin D was such that supply thereof was such that inner piping was employed as shown in FIG. 1 so as to cause mixing with other raw material(s) prior to supply thereof to the extruder. Following drying of the respective resin raw materials, the first and third extruders were used to melt extrude the resin mixture for formation of surface layer (A) at a resin temperature of 285° C, and the second extruder was used to melt the resin mixture for formation of base layer (B) at a resin temperature of 285° C, these being combined and laminated together so as to cause thicknesses to be in the ratio 1/10/1 (μm) within the T die, the order thereof being, from the side that came in contact with the casting drum, surface layer (A)/base layer (B)/surface layer (A), these being expelled from the T-shaped orifice fixture, and being cooled and solidified at a casting drum having a surface temperature of 30° C, to obtain an unstretched polyethylene terephthalate sheet.

At this time, a wire-like electrode of diameter 0.15 mm was used to cause application of static electricity to cause the three-layer unstretched film that was obtained to adhere to the cooling drum.

The unstretched film that was obtained was heated to 115° C, and this was made to undergo stretching in the machine direction in three steps of 1.24x during the first step, 1.4x during the second step, and 2.6x during the third step, for a total stretching ratio of 4.5x.

This was then made to undergo stretching in the transverse direction at a temperature of 140° C and a stretching ratio of 4.3x, heat setting was carried out at 245° C, this was subjected to 5% thermal relaxation treatment in the transverse direction, corona treatment was carried out under conditions of 40 W·min/$m^2$ at surface layer (A) on the side that came in contact with the chill roller, and a winder was used to wind this up into a rolled state to fabricate a master roll (wound length 30000 m; width 8000 mm) of biaxially oriented polyester film of thickness 12 μm.

A roll of biaxially oriented polyester film was wound onto a roll core of diameter 6 inches (152.2 mm) from the master roll that was obtained, surface pressure being applied to the film roll by a contact roller and tension being applied to the film by a two-shaft turret winder as this was slit to a width of 800 mm to cause this to be wound up into a film roll.

Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 2

Except for the fact that raw materials were changed so that surface layer (A) was such that Polyester Resin A was 64.0 mass% and Polyester Resin E was 36.0 mass%, base layer (B) was such that Polyester Resin A was 64.0 mass% and Polyester Resin E was 36.0 mass%, and thicknesses were in the ratio 3/6/3 (μm) within the T die, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 3

Except for the fact that raw materials were changed so that surface layer (A) was such that Polyester Resin A was 78.0 mass% and Polyester Resin F was 22.0 mass%, and base layer (B) was such that Polyester Resin A was 98.0 mass% and Polyester Resin F was 2.0 mass%, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 4

Except for the fact that raw materials were changed so that surface layer (A) was such that Polyester Resin A was 83.5 mass% and Polyester Resin G was 16.5 mass%, and base layer (B) was such that Polyester Resin A was 100.0 mass%, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 5

Except for the fact that raw materials were changed so that polyester resins at surface layer (A) were Polyester Resin B, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 6

Except for the fact that raw materials were changed so that Polyester Resin A employed at surface layer (A) and base layer (B) in Working Example 1 was Polyester Resin C, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 7

Except for the fact that raw materials were changed so that Polyester Resin A employed at surface layer (A) and base layer (B) in Working Example 1 was Polyester Resin A/Polyester Resin C in a ratio of 50/50, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 8

Except for the fact that Polyester Resin A employed at surface layer (A) and base layer (B) in Working Example 1 was changed to Polyester Resin A/Polyester Resin C in a ratio of 10/90, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 9

Except for the fact that raw materials were changed so that the polyester resins at surface layer (A) and base layer (B) were Polyester Resin C/Polyester Resin D in a ratio of 50/50, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Working Example 10

Except for the fact that raw materials were changed so that polyester resins at surface layer (A) were a mixture of 90 wt% of Polyester Resin C and 10 wt% of Polyester Resin D, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Comparative Example 1

Except for the fact that raw materials were changed so that polyester resins at surface layer (A) were Polyester Resin D, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Comparative Example 2

Except for the fact that raw materials were changed so that surface layer (A) was such that Polyester Resin A was 82.0 mass% and Polyester Resin I was 18.0 mass%, and base layer (B) was such that Polyester Resin A was 98.6 mass% and Polyester Resin I was 1.4 mass%, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Comparative Example 3

Except for the fact that raw materials were changed so that, at surface layer (A) and base layer (B), Polyester Resin A was 96.0 mass% and Polyester Resin J was 4.0 mass%, formation of biaxially stretched film was carried out in similar fashion as at Working Example 1 to obtain biaxially oriented polyester film of thickness 12 μm. Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

Comparative Example 4

Three extruders were used to form a film having a three-layer constitution as at Working Example 1. Base layer (B) was such that Polyester Resin A was 95.0 mass% and Polyester Resin E was 5.0 mass%; surface layer (A) was such that Polyester Resin A was 87.5 mass% and Polyester Resin E was 12.5 mass%. However, Polyester Resin A and Polyester Resin E were always supplied to the extruders in a mixed state. In other words, inner piping was not used for Polyester Resin E, this being instead supplied to the extruder in a mixed state from a location at the upper portion of the hopper. Following drying of the respective resin raw materials, the first and third extruders were used to melt extrude the resin mixture for formation of surface layer (A) at a resin temperature of 285° C, and the second extruder was used to melt the resin mixture for formation of base layer (B) at a resin temperature of 285° C, these being combined and laminated together so as to cause thicknesses to be in the ratio 1/10/1 (μm) within the T die, the order thereof being, from the side that came in contact with the casting drum, surface layer (A)/base layer (B)/surface layer (A), these being expelled from the T-shaped orifice fixture, and being cooled and solidified at a casting drum having a surface temperature of 30° C, to obtain an unstretched polyethylene terephthalate sheet. At this time, a wire-like electrode of diameter 0.15 mm was used to cause application of static electricity to cause the three-layer unstretched film that was obtained to adhere to the cooling drum.

The unstretched film that was obtained was heated to 115° C, and this was made to undergo stretching in the machine direction in three steps of 1.24x during the first step, 1.4x during the second step, and 2.6x during the third step, for a total stretching ratio of 4.5x.

This was then made to undergo stretching in the transverse direction at a temperature of 140° C and a stretching ratio of 4.3x, heat setting was carried out at 245° C, this was subjected to 5% thermal relaxation treatment in the transverse direction, corona treatment was carried out under conditions of 40 W·min/$m^2$ at surface layer (A) on the side that came in contact with the chill roller, and a winder was used to wind this up into a rolled state to fabricate a master roll (wound length 30000 m; width 8000 mm) of biaxially oriented polyester film of thickness 12 μm.

A roll of biaxially oriented polyester film was wound onto a roll core of diameter 6 inches (152.2 mm) from the master roll that was obtained, surface pressure being applied to the film roll by a contact roller and tension being applied to the film by a two-shaft turret winder as this was slit to a width of 800 mm to cause this to be wound up into a film roll.

Raw material composition and film formation conditions for the film that was obtained, and physical properties and results of evaluation for the film that was obtained, are shown in TABLE 2. Evaluation of the film was carried out at the surface layer (A) on the side that came in contact with the chill roller.

As can be seen from the results in TABLE 2, because the films of Working Examples 1 through 10 were such that maximum projecting height Sp, haze, air purge time, and variation in the machine method were within prescribed ranges therefor, they were of excellent transparency and mechanical characteristics, and also had excellent ability to be wound up into a roll and/or lubricity during film manufacturing operations, and they were polyester films that were environmentally friendly due to their use of polyester resin(s) recycled by the market and/or society and including PET bottles, and they had little foreign matter, and they exhibited little variation in physical properties in the machine direction thereof even when in the form of a long film roll, i.e., a roll of long wound length.

Because Comparative Example 1 was such that maximum projecting height Sp, haze, air purge time, and variation in the machine direction of the film obtained thereat was within prescribed ranges therefor, it was of excellent transparency and mechanical characteristics, and also had excellent ability to be wound up into a roll and/or lubricity during film manufacturing operations; however, because it was conventional polyester resin derived from fossil fuel, it was inferior as an environmentally friendly polyester film.

Although Comparative Example 2 was such that the haze, air purge time, and variation in the machine direction of the film obtained thereat were within the ranges therefor, because the maximum projecting height Sp thereof was large, it was inferior in terms of the smoothness of the film.

Although Comparative Example 3 was such that the maximum projecting height Sp, haze, air purge time, and variation in the machine direction of the film obtained thereat were within the ranges therefor, because the air purge time thereof was long, purging of air entrained therebetween when this was being wound up into a roll was nonuniform, and the result of evaluation of wrinkling when wound into a roll was BAD.

Because Working Example 5 was such that maximum projecting height Sp, haze, air purge time, and variation in the machine direction of the film obtained thereat was within prescribed ranges therefor, it was of excellent transparency and mechanical characteristics, and also had excellent ability to be wound up into a roll and/or lubricity during film manufacturing operations; however, because it employed polyester resin(s) recycled by the market and/or society and including PET bottles that had not undergone alkali cleaning, there was much foreign matter in the film, and it was somewhat inferior as a film for continuous production in an industrial setting.

As it did not employ inner piping for supply of raw material, because Comparative Example 4 was such that segregation of raw materials caused there to be large fluctuations in the ratios in which raw materials were present in the machine direction, there was much variation in the machine direction in the maximum projecting height Sp and arithmetic mean height Sa at the film roll that was obtained, and while there were portions throughout the film roll at which it was possible to obtain satisfactory physical properties equivalent to those at Working Example 1 through 4, it was inferior as a film roll for continuous production in an industrial setting.

TABLE 2A

| | | | Working Example 1 | | | Working Example 2 | | | Working Example 3 | | | Working Example 4 | | | Working Example 5 | | | Working Example 6 | | | Working Example 7 | | |
|---|---|---|---|---|---|---|---|---|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A | Layer A | Layer B | Layer A | Layer A | Layer B | Layer A | Layer A | Layer B | Layer A |
| Resin chip mixture ratio (mass%) | Polyester Resin A | | 87.5 | 95 | 87.5 | 64 | 64 | 64 | 78 | 98 | 78 | 83.5 | 100 | 83.5 | - | - | - | - | - | - | 43.75 | 47.5 | 43.75 |
| | Polyester Resin B | | - | - | - | - | - | - | - | - | - | - | - | - | 87.5 | 95 | 87.5 | - | - | - | - | - | - |
| | Polyester Resin C | | - | - | - | - | - | - | - | - | - | - | - | - | - | - | - | 87.5 | 95 | 87.5 | 43.75 | 47.5 | 43.75 |
| | Polyester Resin D | | - | - | - | - | - | - | - | - | - | - | - | - | - | - | - | - | - | - | - | - | - |
| | Polyester Resin E | | 12.5 | 5 | 12.5 | - | - | - | - | - | - | - | - | - | 12.5 | 5 | 12.5 | 12.5 | 5 | 12.5 | 12.5 | 5 | 12.5 |
| | Polyester Resin F | | - | - | - | 36 | 36 | 36 | - | - | - | - | - | - | - | - | - | - | - | - | - | - | - |
| | Polyester Resin G | | - | - | - | - | - | - | 22 | 2 | 22 | - | - | - | - | - | - | - | - | - | - | - | - |
| | Polyester Resin H | | - | - | - | - | - | - | - | - | - | 16.5 | 0 | 16.5 | - | - | - | - | - | - | - | - | - |
| | Polyester Resin I | | - | - | - | - | - | - | - | - | - | - | - | - | - | - | - | - | - | - | - | - | - |
| | Polyester Resin J | | - | - | - | - | - | - | - | - | - | - | - | - | - | - | - | - | - | - | - | - | - |
| | Silica shape | | Irregularly shaped | | | Irregularly shaped | | | Irregularly shaped | | | Irregularly shaped | | | Irregularly shaped | | | Irregularly shaped | | | Irregularly shaped | | |
| | Silica weight average particle diameter (μm) | | 2.5 | | | 2.5 | | | 3.0 | | | 3.5 | | | 2.5 | | | 2.5 | | | 2.5 | | |
| | Amount of silica added (ppm weight) | | 900 | 360 | 900 | 720 | 720 | 720 | 1540 | 144 | 1540 | 1650 | 0 | 1650 | 900 | 360 | 900 | 900 | 360 | 900 | 900 | 360 | 900 |
| Film forming operation | Inner piping | | Present | | | Present | | | Present | | | Present | | | Present | | | Present | | | Present | | |
| | T die layer thicknesses (μm) | | A/B/A=1/10/1 | | | A/B/A=3/6/3 | | | A/B/A=1/10/1 | | | A/B/A=1/10/1 | | | A/B/A=1/10/1 | | | A/B/A=1/10/1 | | | A/B/A=1/10/1 | | |
| | Application of static electricity | | Wire-like electrode Diameter 0.15 mm | | | Wire-like electrode Diameter 0.15 mm | | | Wire-like electrode Diameter 0.15 mm | | | Wire-like electrode Diameter 0.15 mm | | | Wire-like electrode Diameter 0.15 mm | | | Wire-like electrode Diameter 0.15 mm | | | Wire-like electrode Diameter 0.15 mm | | |
| | Chill roller cooling temperature (° C) | | 30 | | | 30 | | | 30 | | | 30 | | | 30 | | | 30 | | | 30 | | |
| | Machine direction stretching temperature (° C) | | 115 | | | 115 | | | 115 | | | 115 | | | 115 | | | 115 | | | 115 | | |
| | Stretching ratio during first step in machine direction (expressed as multiple) | | 1.24 | | | 1.24 | | | 1.24 | | | 1.24 | | | 1.24 | | | 1.24 | | | 1.24 | | |
| | Stretching ratio during second step in machine direction (expressed as multiple) | | 1.4 | | | 1.4 | | | 1.4 | | | 1.4 | | | 1.4 | | | 1.4 | | | 1.4 | | |
| | Stretching ratio during third step in machine direction (expressed as multiple) | | 2.6 | | | 2.6 | | | 2.6 | | | 2.6 | | | 2.6 | | | 2.6 | | | 2.6 | | |
| | Stretching ratio in machine direction (expressed as multiple) | | 4.5 | | | 4.5 | | | 4.5 | | | 4.5 | | | 4.5 | | | 4.5 | | | 4.5 | | |
| | Transverse direction stretching temperature (° C) | | 140 | | | 140 | | | 140 | | | 140 | | | 140 | | | 140 | | | 140 | | |
| | Stretching ratio in transverse direction (expressed as multiple) | | 4.3 | | | 4 | | | 4.3 | | | 4.3 | | | 4.3 | | | 4.3 | | | 4.3 | | |
| | Heat setting temperature (° C) | | 245 | | | 245 | | | 245 | | | 245 | | | 245 | | | 245 | | | 245 | | |
| | Percent relaxation in transverse direction (%) | | 5 | | | 5 | | | 5 | | | 5 | | | 5 | | | 5 | | | 5 | | |
| | Film thickness (μm) | | 12 | | | 12 | | | 12 | | | 12 | | | 12 | | | 12 | | | 12 | | |
| Film characteristics | Number of defects (defects/1000 m2) | | GOOD | | | GOOD | | | GOOD | | | GOOD | | | BAD | | | GOOD | | | GOOD | | |
| | Fractional content of isophthalic acid (mol%) | | 1.41 | | | 0.96 | | | 1.42 | | | 1.46 | | | 1.41 | | | 0 | | | 0.70 | | |
| | Maximum projecting height Sp (μm) | | 1.6 | | | 1.2 | | | 1.7 | | | 2.8 | | | 1.6 | | | 1.5 | | | 1.6 | | |
| | Haze (%) | | 2.6 | | | 2.4 | | | 2.5 | | | 3.0 | | | 2.7 | | | 2.5 | | | 2.4 | | |
| | Air purge time (seconds) | | 7 | | | 13 | | | 7 | | | 3 | | | 7 | | | 8 | | | 7 | | |
| | Arithmetic mean height Sa (μm) | Average value (Xave) | 0.025 | | | 0.032 | | | 0.054 | | | 0.100 | | | 0.025 | | | 0.025 | | | 0.026 | | |
| | | Maximum value (Xmax) | 0.026 | | | 0.034 | | | 0.057 | | | 0.105 | | | 0.026 | | | 0.026 | | | 0.027 | | |
| | | Minimum value (Xmin) | 0.024 | | | 0.031 | | | 0.051 | | | 0.095 | | | 0.024 | | | 0.024 | | | 0.025 | | |
| | | Variation in machine direction | 7 | | | 8 | | | 11 | | | 10 | | | 9 | | | 7 | | | 7 | | |
| | Maximum projecting height Sp (μm) | Average value (Xave) | 1.6 | | | 1.2 | | | 1.7 | | | 2.8 | | | 1.6 | | | 1.5 | | | 1.6 | | |
| | | Maximum value (Xmax) | 1.7 | | | 1.3 | | | 1.802 | | | 2.9 | | | 1.7 | | | 1.6 | | | 1.7 | | |
| | | Minimum value (Xmin) | 1.5 | | | 1.1 | | | 1.615 | | | 2.7 | | | 1.5 | | | 1.4 | | | 1.5 | | |
| | | Variation in machine direction | 8 | | | 10 | | | 11 | | | 10 | | | 9 | | | 8 | | | 8 | | |
| | Amount of silica within film (ppm) | | 460 | | | 690 | | | 379 | | | 270 | | | 465 | | | 460 | | | 460 | | |
| | Coefficient of static friction | | 0.45 | | | 0.42 | | | 0.34 | | | 0.25 | | | 0.44 | | | 0.44 | | | 0.45 | | |
| | Coefficient of dynamic friction | | 0.45 | | | 0.41 | | | 0.36 | | | 0.26 | | | 0.43 | | | 0.43 | | | 0.44 | | |
| | Evaluation of wrinkling when wound into a roll | | GOOD | | | FAIR | | | GOOD | | | GOOD | | | GOOD | | | GOOD | | | GOOD | | |

TABLE 2B

| | | | Working Example 8 | | | Working Example 9 | | | Working Example 10 | | | Comparative Example 1 | | | Comparative Example 2 | | | Comparative Example 3 | | | Comparative Example 4 | | |
|---|---|---|---|---|---|---|---|---|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A | Layer A | Layer B | Layer A | Layer A | Layer B | Layer A | Layer A | Layer B | Layer A |
| Resin chip mixture ratio (mass%) | Polyester Resin A | | 8.75 | 9.5 | 8.75 | - | - | - | - | - | - | - | - | - | 82 | 98.6 | 82 | 96 | 96 | 96 | 87.5 | 95 | 87.5 |
| | Polyester Resin B | | - | - | - | - | - | - | - | - | - | - | - | - | - | - | - | - | - | - | - | - | - |
| | Polyester Resin C | | 78.75 | 85.5 | 78.75 | 43.75 | 47.5 | 43.75 | 78.75 | 85.5 | 78.75 | | | | | | | | | | | | |
| | Polyester Resin D | | - | - | - | 43.75 | 47.5 | 43.75 | 8.75 | 9.5 | 8.75 | 87.5 | 95 | 87.5 | - | - | - | - | - | - | - | - | - |
| | Polyester Resin E | | 12.5 | 5 | 12.5 | 12.5 | 5 | 12.5 | 12.5 | 5 | 12.5 | 12.5 | 5 | 12.5 | - | - | - | - | - | - | 12.5 | 5 | 12.5 |
| | Polyester Resin F | | - | - | - | - | - | - | - | - | - | - | - | - | - | - | - | - | - | - | - | - | - |
| | Polyester Resin G | | - | - | - | - | - | - | - | - | - | - | - | - | - | - | - | - | - | - | - | - | - |
| | Polyester Resin H | | - | - | - | - | - | - | - | - | - | - | - | - | - | - | - | - | - | - | - | - | - |
| | Polyester Resin I | | - | - | - | - | - | - | - | - | - | - | - | - | 18 | 1.4 | 18 | - | - | - | - | - | - |
| | Polyester Resin J | | - | - | - | - | - | - | - | - | - | - | - | - | - | - | - | 4 | 4 | 4 | - | - | - |
| | Silica shape | | Irregularly shaped | | | Irregularly shaped | | | Irregularly shaped | | | Irregularly shaped | | | Irregularly shaped | | | Irregularly shaped | | | Irregularly shaped | | |
| | Silica weight average particle diameter (µm) | | 2.5 | | | 2.5 | | | 2.5 | | | 2.5 | | | 4.0 | | | 2.5 | | | 2.5 | | |
| | Amount of silica added (ppm weight) | | 900 | 360 | 900 | 900 | 360 | 900 | 900 | 360 | 900 | 900 | 360 | 900 | 1800 | 140 | 1800 | 600 | 600 | 600 | 900 | 360 | 900 |
| Film forming operation | Inner piping | | Present | | | Present | | | Present | | | Present | | | Present | | | Present | | | Not present | | |
| | T die layer thicknesses (µm) | | A/B/A=1/10/1 | | | A/B/A=1/10/1 | | | A/B/A=1/10/1 | | | A/B/A=1/10/1 | | | A/B/A=1/10/1 | | | A/B/A=3/6/3 | | | A/B/A=1/10/1 | | |
| | Application of static electricity | | Wire-like electrode Diameter 0.15 mm | | | Wire-like electrode Diameter 0.15 mm | | | Wire-like electrode Diameter 0.15 mm | | | Wire-like electrode Diameter 0.15 mm | | | Wire-like electrode Diameter 0.15 mm | | | Wire-like electrode Diameter 0.15 mm | | | Wire-like electrode Diameter 0.15 mm | | |
| | Chill roller cooling temperature (° C) | | 30 | | | 30 | | | 30 | | | 30 | | | 30 | | | 30 | | | 30 | | |
| | Machine direction stretching temperature (° C) | | 115 | | | 115 | | | 115 | | | 115 | | | 115 | | | 115 | | | 115 | | |
| | Stretching ratio during first step in machine direction (expressed as multiple) | | 1.24 | | | 1.24 | | | 1.24 | | | 1.24 | | | 1.24 | | | 1.24 | | | 1.24 | | |
| | Stretching ratio during second step in machine direction (expressed as multiple) | | 1.4 | | | 1.4 | | | 1.4 | | | 1.4 | | | 1.4 | | | 1.4 | | | 1.4 | | |
| | Stretching ratio during third step in machine direction (expressed as multiple) | | 2.6 | | | 2.6 | | | 2.6 | | | 2.6 | | | 2.6 | | | 2.6 | | | 2.6 | | |
| | Stretching ratio in machine direction (expressed as multiple) | | 4.5 | | | 4.5 | | | 4.5 | | | 4.5 | | | 4.5 | | | 4.5 | | | 4.5 | | |
| | Transverse direction stretching temperature (° C) | | 140 | | | 140 | | | 140 | | | 140 | | | 140 | | | 140 | | | 140 | | |
| | Stretching ratio in transverse direction (expressed as multiple) | | 4.3 | | | 4.3 | | | 4.3 | | | 4.3 | | | 4.3 | | | 4.3 | | | 4.3 | | |
| | Heat setting temperature (° C) | | 245 | | | 245 | | | 245 | | | 245 | | | 245 | | | 245 | | | 245 | | |
| | Percent relaxation in transverse direction (%) | | 5 | | | 5 | | | 5 | | | 5 | | | 5 | | | 5 | | | 5 | | |
| | Film thickness (µm) | | 12 | | | 12 | | | 12 | | | 12 | | | 12 | | | 12 | | | 12 | | |
| Film characteristics | Number of defects (defects/1000 m2) | | GOOD | | | GOOD | | | GOOD | | | GOOD | | | GOOD | | | GOOD | | | GOOD | | |
| | Fractional content of isophthalic acid (mol%) | | 0.14 | | | 0.00 | | | 0.00 | | | 0.00 | | | 1.44 | | | 1.44 | | | 1.41 | | |
| | Maximum projecting height Sp (µm) | | 1.7 | | | 1.5 | | | 1.6 | | | 1.5 | | | 3.6 | | | 0.8 | | | 1.0/1.6 | | |
| | Haze (%) | | 2.5 | | | 2.6 | | | 2.5 | | | 2.6 | | | 8.0 | | | 2.1 | | | 2.6 | | |
| | Air purge time (seconds) | | 6 | | | 7 | | | 8 | | | 8.0 | | | 1 | | | 19 | | | 8/16 | | |
| | Arithmetic mean height Sa (µm) | Average value (Xave) | 0.027 | | | 0.025 | | | 0.024 | | | 0.024 | | | 0.120 | | | 0.019 | | | 0.025 | | |
| | | Maximum value (Xmax) | 0.028 | | | 0.026 | | | 0.025 | | | 0.025 | | | 0.126 | | | 0.020 | | | 0.029 | | |
| | | Minimum value (Xmin) | 0.026 | | | 0.024 | | | 0.023 | | | 0.023 | | | 0.115 | | | 0.018 | | | 0.019 | | |
| | | Variation in machine direction | 7 | | | 7 | | | 7 | | | 8 | | | 9 | | | 10 | | | 42 | | |
| | Maximum projecting height Sp (µm) | Average value (Xave) | 1.7 | | | 1.7 | | | 1.5 | | | 1.5 | | | 3.6 | | | 0.8 | | | 1.5 | | |
| | | Maximum value (Xmax) | 1.8 | | | 1.8 | | | 1.6 | | | 1.6 | | | 3.8 | | | 0.9 | | | 1.7 | | |
| | | Minimum value (Xmin) | 1.6 | | | 1.6 | | | 1.4 | | | 1.4 | | | 3.4 | | | 0.7 | | | 1.0 | | |
| | | Variation in machine direction | 8 | | | 8 | | | 8 | | | 9 | | | 11 | | | 14 | | | 41 | | |
| | Amount of silica within film (ppm) | | 460 | | | 460 | | | 460 | | | 452 | | | 412 | | | 586 | | | 465 | | |
| | Coefficient of static friction | | 0.46 | | | 0.46 | | | 0.46 | | | 0.44 | | | 0.23 | | | 0.52 | | | 0.45 | | |
| | Coefficient of dynamic friction | | 0.45 | | | 0.44 | | | 0.43 | | | 0.45 | | | 0.22 | | | 0.51 | | | 0.45 | | |
| | Evaluation of wrinkling when wound into a roll | | GOOD | | | GOOD | | | GOOD | | | GOOD | | | GOOD | | | BAD | | | GOOD/BAD | | |

INDUSTRIAL UTILITY

Biaxially oriented polyester film rolls in accordance with the present invention make it possible to provide biaxially oriented polyester film rolls which have excellent transparency and mechanical characteristics, which also have excellent ability to be wound up into rolls and/or lubricity during film manufacturing operations, which comprise polyester film that is environmentally friendly due to their use of polyester resin(s) recycled by the market and/or society and including PET bottles, which have little foreign matter, and which exhibit little variation in physical properties in the machine direction thereof even when in the form of long film rolls, i.e., rolls of long wound length, and production methods therefor.

Because these may be widely employed in the field of films for packaging use in gas barrier film applications and for food packaging, and because there is strong demand of late for reduction in environmental impact, it is to be expected that they will contribute greatly to the industry.

## Claims

1. A biaxially oriented polyester film roll, wound up at which there is a biaxially oriented polyester film comprising a polyester resin composition comprising particles and polyester resin employing recycled PET bottles, wherein arithmetic mean height Sa at at least one face of the biaxially oriented polyester film is not greater than 0.10 μm, and the biaxially oriented polyester film roll satisfies all of conditions (1) through (4), below;

   (1) maximum projecting height Sp at at least one film surface is not greater than 3.0 μm;
   (2) haze is not greater than 10% for a film thickness of 12 μm;
   (3) purge time for air between front and back surfaces of the film measured as defined in the description is not greater than 14 seconds;
   (4) variation in arithmetic mean height Sa and in maximum projecting height Sp when sampling is carried out at 1000 m intervals from a surface layer of the film roll to a roll core thereof in a machine direction of the film are each not greater than 40%;

   where the variation is given by Formula [1], below, when maximum value is taken to be Xmax, minimum value is taken to be Xmin, and average value is taken to be Xave; and

$$\text{Variation (\%)} = 100 \times (\text{Xmax - Xmin})/\text{Xave} \qquad [1] .$$

2. A biaxially oriented polyester film roll according to claim 1 **characterized in that** the polyester resin employing the recycled PET bottles is mechanically recycled polyester resin and/or chemically recycled polyester resin.

3. A biaxially oriented polyester film roll according to the foregoing claim 1 or 2 **characterized in that** content of an isophthalic acid component as a fraction of 100 mol% of an entire dicarboxylic acid component within the polyester resin composition which the biaxially oriented polyester film comprises is not less than 0.01 mol% but not greater than 2.0 mol%.

4. A biaxially oriented polyester film roll according to any of claims 1 through 3 **characterized in that** a number of defects that are 1 mm or larger in size per 100 $m^2$ of the film less than 20.

5. A biaxially oriented polyester film roll according to any of claims 1 through 4 wherein a coefficient of dynamic friction between one face and a face opposite thereto at the biaxially oriented polyester film is not less than 0.20 but not greater than 0.60.

6. A biaxially oriented polyester film roll according to any of claims 1 through 5 wherein a total amount of inorganic particles contained within all layers of the biaxially oriented polyester film is not less than 100 ppm but not greater than 1000 ppm.

7. A biaxially oriented polyester film roll according to any of claims 1 through 6 **characterized in that** the polyester resin employing the recycled PET bottles is polyester resin employing recycled PET bottles that have undergone alkali cleaning at least once.

## Patentansprüche

1. Eine Rolle einer biaxial orientierten Polyesterfolie, auf der aufgerollt eine biaxial orientierte Polyesterfolie vorliegt, umfassend eine Polyesterharzzusammensetzung, die Partikel und Polyesterharz umfasst, das recycelte PET-Flaschen verwendet, wobei die arithmetische mittlere Höhe Sa an mindestens einer Fläche der biaxial orientierten Polyesterfolie nicht größer als 0,10 μm ist, und die Rolle einer biaxial orientierten Polyesterfolie alle der folgenden Bedingungen (1) bis (4) erfüllt;

   (1) die maximale Projektionshöhe Sp an mindestens einer Folienoberfläche beträgt nicht mehr als 3,0 μm;
   (2) die Trübung beträgt nicht mehr als 10 % bei einer Foliendicke von 12 μm;
   (3) die Entlüftungszeit für Luft zwischen Vorder- und Rückseiten der Folie, gemessen wie in der Beschreibung definiert, beträgt nicht mehr als 14 Sekunden;
   (4) die Variation der arithmetischen mittleren Höhe Sa und der maximalen Projektionshöhe Sp beträgt bei einer Probenahme, die in Abständen von 1000 m von einer Oberflächenschicht der Folienrolle zu einem Rollenkern davon ausgeführt wird, in Maschinenrichtung der Folie jeweils nicht mehr als 40 %;

   wobei die Abweichung durch die nachstehende Formel [1] gegeben ist, wobei der Maximalwert als Xmax, der Minimalwert als Xmin und der Durchschnittswert als Xave genommen werden; und

$$\text{Variation (\%)} = 100 \times (\text{Xmax - Xmin})/\text{Xave} \qquad [1]$$

2. Eine Rolle einer biaxial orientierten Polyesterfolie gemäß Anspruch 1, **dadurch gekennzeichnet, dass** das Polyesterharz, das die recycelten PET-Flaschen verwendet, mechanisch recyceltes Polyesterharz und/oder chemisch recyceltes Polyesterharz ist.

3. Eine Rolle einer biaxial orientierten Polyesterfolie gemäß dem vorstehenden Anspruch 1 oder 2, **dadurch gekennzeichnet, dass** der Gehalt einer Isophthalsäurekomponente als ein Anteil von 100 mol-% einer gesamten Dicarbonsäurekomponente in der Polyesterharzzusammensetzung, welche die biaxial orientierte Polyesterfolie umfasst, nicht weniger als 0,01 mol-% aber nicht mehr als 2,0 mol-% beträgt.

4. Eine Rolle einer biaxial orientierten Polyesterfolie gemäß einem der Ansprüche 1 bis 3, **dadurch gekennzeichnet, dass** eine Anzahl der Defekte, die eine Größe von 1 mm oder größer aufweisen, pro 100 $m^2$ der Folie weniger als 20 beträgt.

5. Eine Rolle einer biaxial orientierten Polyesterfolie gemäß einem der Ansprüche 1 bis 4, wobei ein dynamischer Reibungskoeffizient zwischen einer Fläche und einer gegenüberliegenden Fläche der biaxial orientierten Polyesterfolie nicht weniger als 0,20 aber nicht mehr als 0,60 beträgt.

6. Eine Rolle einer biaxial orientierten Polyesterfolie gemäß einem der Ansprüche 1 bis 5, wobei eine Gesamtmenge an anorganischen Partikeln, die in allen Schichten der biaxial orientierten Polyesterfolie enthalten sind, nicht weniger als 100 ppm, aber nicht mehr als 1000 ppm beträgt.

7. Eine Rolle einer biaxial orientierten Polyesterfolie gemäß einem der Ansprüche 1 bis 6, **dadurch gekennzeichnet, dass** das Polyesterharz, das die recycelten PET-Flaschen verwendet, Polyesterharz ist, das recycelte PET-Flaschen verwendet, die mindestens einmal einer Alkalireinigung unterzogen wurden.

## Revendications

1. Rouleau de film de polyester à orientation biaxiale produit par enroulement d'un film de polyester à orientation biaxiale comprenant une composition de résine de polyester comprenant des particules et une résine de polyester employant des bouteilles de PET recyclées, dans lequel la hauteur moyenne arithmétique Sa au niveau d'au moins une face du film de polyester à orientation biaxiale n'est pas supérieure à 0,10 μm, et lequel rouleau de film de polyester à orientation biaxiale satisfait à toutes les conditions (1) à (4) ci-dessous ;

   (1) la hauteur maximale des saillies Sp au niveau d'au moins une surface du film n'est pas supérieure à 3,0 μm ;
   (2) le voile n'est pas supérieur à 10 % pour une épaisseur de film de 12 μm ;

(3) le temps de purge de l'air entre les surfaces recto et verso du film, mesuré comme défini dans la description, n'est pas supérieur à 14 secondes ;

(4) la variation de chacune parmi la hauteur moyenne arithmétique Sa et la hauteur maximale des saillies Sp, quand un échantillonnage est effectué à intervalles de 1 000 m depuis une couche de surface du rouleau de film jusqu'à l'âme de ce rouleau, dans le sens machine du film, n'est pas supérieure à 40 % ;

où la variation est donnée par la formule [1] ci-dessous, quand la valeur maximale est indiquée par Xmax, la valeur minimale est indiquée par Xmin, et la valeur moyenne est indiquée par Xave ; et

$$\text{Variation (\%)} = 100 \times (\text{Xmax} - \text{Xmin}) / \text{Xave} \qquad [1].$$

**2.** Rouleau de film de polyester à orientation biaxiale selon la revendication 1, **caractérisée en ce que** la résine de polyester employant les bouteilles de PET recyclées est une résine de polyester mécaniquement recyclée et/ou une résine de polyester chimiquement recyclée.

**3.** Rouleau de film de polyester à orientation biaxiale selon la revendication 1 ou 2, **caractérisé en ce que** la teneur en un composant acide isophtalique en tant que fraction de 100 % en moles de la totalité du composant acide dicarboxylique à l'intérieur de la composition de résine de polyester que le film de polyester à orientation biaxiale comprend n'est pas inférieure à 0,01 % en moles mais pas supérieure à 2,0 % en moles.

**4.** Rouleau de film de polyester à orientation biaxiale selon l'une quelconque des revendications 1 à 3, **caractérisé en ce que** le nombre de défauts ayant une taille de 1 mm ou plus par 100 $m^2$ du film est inférieur à 20.

**5.** Rouleau de film de polyester à orientation biaxiale selon l'une quelconque des revendications 1 à 4, dans lequel un coefficient de frottement dynamique entre une face et une face opposée à celle-ci sur le film de polyester à orientation biaxiale n'est pas inférieur à 0,20 mais pas supérieur à 0,60.

**6.** Rouleau de film de polyester à orientation biaxiale selon l'une quelconque des revendications 1 à 5, dans lequel la quantité totale de particules inorganiques contenues à l'intérieur de toutes les couches du film de polyester à orientation biaxiale n'est pas inférieure à 100 ppm mais pas supérieure à 1 000 ppm.

**7.** Rouleau de film de polyester à orientation biaxiale selon l'une quelconque des revendications 1 à 6, **caractérisé en ce que** la résine de polyester employant des bouteilles de PET recyclées est une résine de polyester employant des bouteilles de PET recyclées qui ont subi un nettoyage par un alcali au moins une fois.

[FIG. 1]

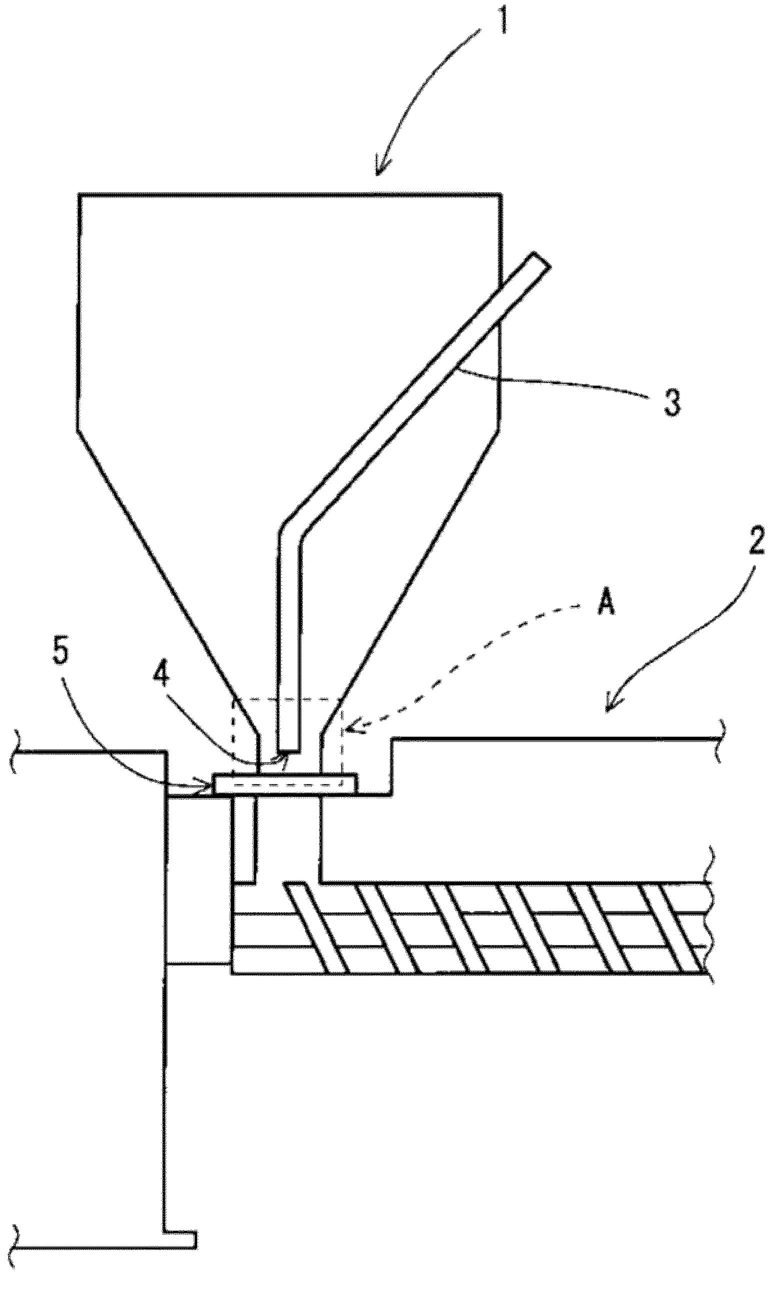

[FIG. 2]

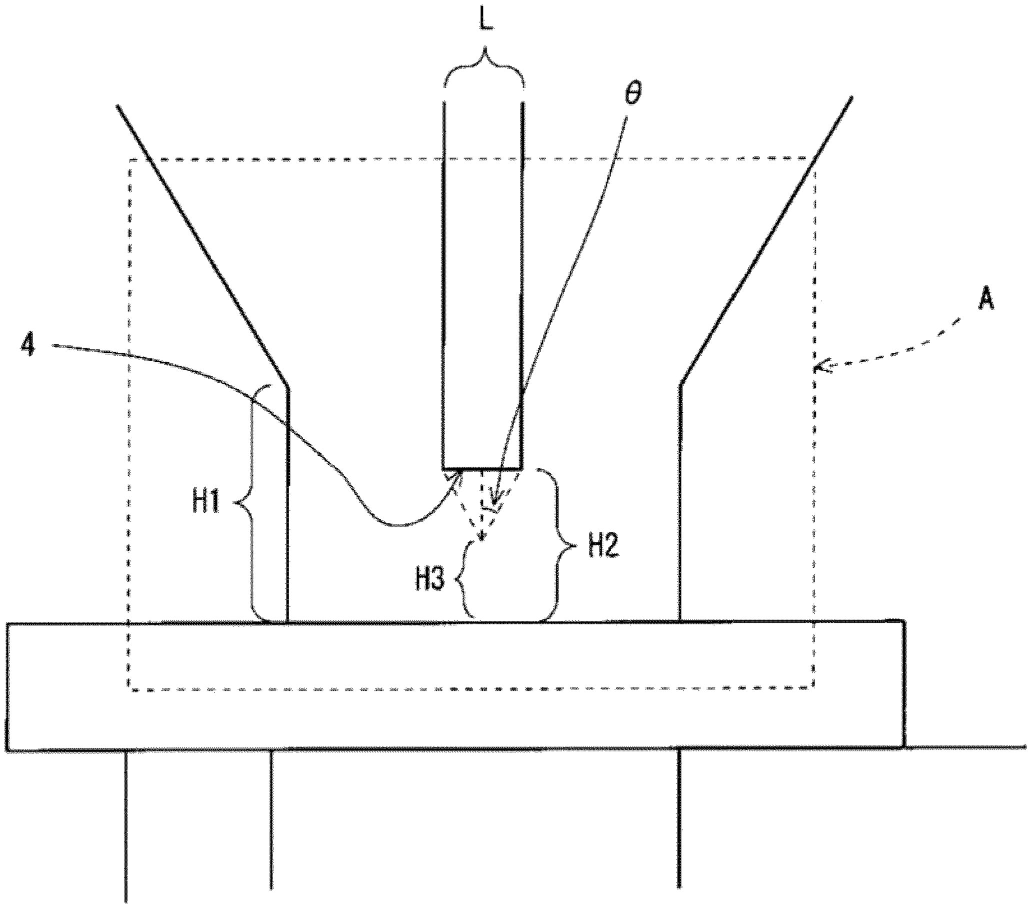

[FIG. 3]

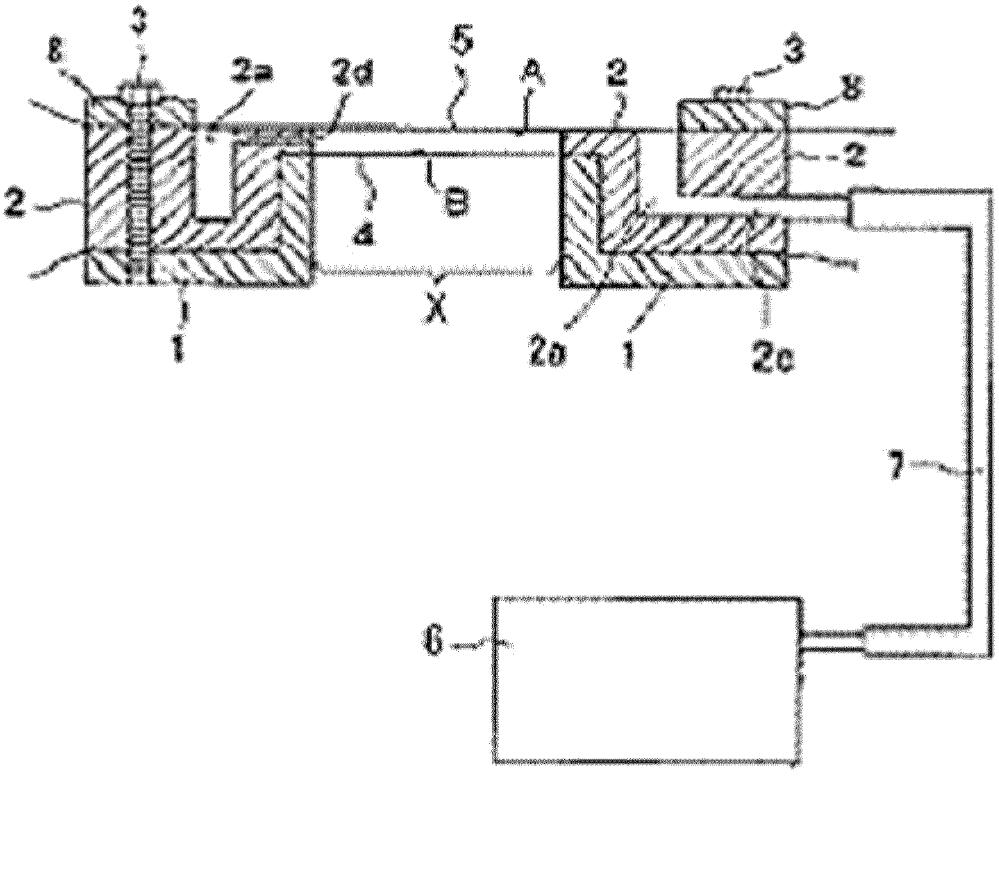

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6036099 B
- WO 2020095725 A1
- WO 2019187694 A1
- JP 2000169623 A
- JP 2000302707 A